(19) Europäisches Patentamt / European Patent Office / Office européen des brevets

(11) **EP 2 096 815 B1**

(12) **EUROPEAN PATENT SPECIFICATION**

(45) Date of publication and mention
of the grant of the patent:
**19.05.2010 Bulletin 2010/20**

(51) Int Cl.:
*H04L 25/06* (2006.01)    *H04L 25/03* (2006.01)
*H04L 1/00* (2006.01)    *H04B 1/707* (2006.01)

(21) Application number: **08003791.4**

(22) Date of filing: **29.02.2008**

(54) **An apparatus and a method for providing probability measures**

Vorrichtung und Verfahren zur Bereitstellung von Wahrscheinlichkeitsmassen

Appareil et procédé pour la fourniture de mesures de probabilité

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.09.2009 Bulletin 2009/36**

(73) Proprietor: **NTT DoCoMo, Inc.**
**Chiyoda-ku**
**Tokyo 100-6150 (JP)**

(72) Inventor: **Kusume, Katsutoshi**
**80687 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 775 869**

• LIU D N ET AL: "Low complexity linear MMSE detector with recursive update algorithm for iterative detection-decoding MIMO OFDM system" WIRELESS COMMUNICATIONS AND NETWORKING CONFERENCE, 2006. WCNC 2006. IE EE LAS VEGAS, NV, USA 3-6 APRIL 2006, PISCATAWAY, NJ, USA,IEEE, vol. 2, 3 April 2006 (2006-04-03), pages 850-855, XP010940694 ISBN: 978-1-4244-0269-4

• MICHAEL TÜCHLERTUCHLER ET AL: "Minimum Mean Squared Error EqualizationUsing A Priori Information" IEEE TRANSACTIONS ON SIGNAL PROCESSING, IEEE SERVICE CENTER, NEW YORK, NY, US, vol. 50, no. 3, 1 March 2002 (2002-03-01), XP011059572 ISSN: 1053-587X

• XIAODONG WANG ET AL: "Iterative (Turbo) Soft Interference Cancellation and Decoding for Coded CDMA" IEEE TRANSACTIONS ON COMMUNICATIONS, IEEE SERVICE CENTER, PISCATAWAY, NJ, US, vol. 47, no. 7, 1 July 1999 (1999-07-01), XP011009462 ISSN: 0090-6778

• KUSUME K ET AL: "CDMA and IDMA: Iterative Multiuser Detections for Near-Far Asynchronous Communications" PERSONAL, INDOOR AND MOBILE RADIO COMMUNICATIONS, 2005. PIMRC 2005. IE EE 16TH INTERNATIONAL SYMPOSIUM ON, IEEE, PI, 1 January 2005 (2005-01-01), pages 426-431, XP031099780

• KATSUTOSHI KUSUME ET AL: "A Simple Complexity Reduction Strategy for Interleave Division Multiple Access" VEHICULAR TECHNOLOGY CONFERENCE, 2006. VTC-2006 FALL. 2006 IEEE 64TH, IEEE, PI, 1 September 2006 (2006-09-01), pages 1-5, XP031051424 ISBN: 978-1-4244-0062-1

• KUSUME K ET AL: "Performance of Interleave Division Multiple Access Based on Minimum Mean Square Error Detection" COMMUNICATIONS, 2007. ICC '07. IEEE INTERNATIONAL CONFERENCE ON, IEEE, PI, 1 June 2007 (2007-06-01), pages 2961-2966, XP031126125 ISBN: 978-1-4244-0353-0

**Description**

The present invention is in the field of data detection, as for example in receivers for receiving signals from multiple transmitters.

Modern receiver architecture, as they are for example deployed in mobile communication systems at the base station transceivers could utilize more effective signal processing algorithms if there was enough processing power or respectively if effective signal processing algorithms were less complex. Complexity reduction of iterative detection and decoding techniques has been an issue since first digital communication systems were introduced. In particular, multiuser detection (MUD) techniques of spread spectrum communication systems such as code division multiple access (CDMA) or interleave division multiple access (IDMA) systems have attracted many researchers.

Receiver comprising a multiuser detector and a bank of a *posteriori probability* (APP) decoders which iteratively exchange soft information in the form of *log likelihood ratio* (LLR) to mitigate *multiple access interference* (MAI) as well as *intersymbol interference* (ISI) haven been studied extensively. The minimum *mean square error* (MMSE) detection, cf. X. Wang and H. V. Poor, "Iterative (Turbo) soft interference cancellation and decoding for coded CDMA", IEEE Transactions on Communications, vol. 47, no. 7, pp. 1046-1061, July 1999, was proposed as a less complex suboptimum solution comparing to the optimum detector, cf. M. Moher, "An iterative multiuser decoder for near-capacity communications," IEEE Transactions on Communications, vol. 46, no. 7, pp. 870- 880, July 1998, in the context of iterative detection and decoding techniques.

However, the MMSE solution is still complex due to many matrix inversions that have to be computed for each combination of symbol $n \in \{1,...,N\}$ user $k \in \{1,...,K\}$, and iteration $q \in \{0,...,Q\}$.

There have been several proposals to reduce the complexity of the MMSE detector. X. Wang and H. V. Poor have shown that matrix inversions for different $K$ users could be computed from a common matrix inversion that is more efficient than individually computing $K$ matrix inversions for certain symbol n and at $q$-th iteration. In M. Tüchler, A.C. Singer, and R. Koetter, "Minimum mean squared error equalization using a priori information", IEEE Transactions on Signal Processing, vol. 50, no. 3, pp. 673-683, March 2002, the authors proposed a recursive scheme, which computes a matrix inversion for a symbol at $n+1$ from that for a symbol at n. This can be more efficiently done than computing inversions for $N$ symbols independently of each other. It can be noted, however, that this symbol-wise recursive complexity reduction approach depends on a special Toeplitz structure of channel matrix and it cannot be applied if, e.g. channel is time-varying or scrambling codes are used for CDMA systems even if channels are time-invariant (no mobility).

Daniel N. Liu and Michael P. Fitz disclose in "Low complexity linear MMSE detector with recursive update algorithm for iterative detection-decoding MIMO OFDM system", Wireless Communications and Networking Conference, 2006, WCNC 2006, IEEE Las Vegas, NV, USA, 3-6 April 2006, iterative turbo processing.

The authors consider iterative turbo processing between detection and decoding, which shows near-capacity performance on multiple antenna systems. Iterative processing is combined with optimum front end detection, which is particularly challenging because the front-end maximum-a-posteriori algorithm has a computational complexity that is exponential in the throughput. Suboptimum detectors such as the soft interference cancellation linear minimum mean square error detector with near front-end maximum a posteriori performance is proposed by the authors. The asymptotic computational complexity of this algorithm remains low per detection-decoding cycle and depends on the number of transmit and receive antennas as well on the size of the modulation alphabet.

The front-end detection algorithm has low complexity, which is demonstrated by simulation results. The simulation results demonstrate that the proposed low complexity detection algorithm offers exactly the same performance as its full complexity counterpart in an iterative receiver while being computationally more efficient. Reformulating the matrix inversion step in conventional linear minimum mean square error filtering processes into recursive update algorithms allows a more flexible allocation of computational resources and is more suitable for iterative processing receivers. Moreover, the authors show in a complexity analysis that the proposed system achieves about the same complexity as a hard interference cancellation linear minimum mean square error detector, but with a better packet error rate.

It is the object of the present invention to provide a more cost effective concept for providing probability measure from a receive signal.

The object is achieved by an apparatus according to claim 1, a base station transceiver according to claim 22, a mobile station according to claim 23 and a method according to claim 24.

The present invention is based on the finding of a new differential recursive update algorithm for complexity reduction of iterative minimum mean square error (MMSE) detection and decoding techniques, e.g. for spread spectrum communication systems. Although the MMSE detector may be a less complex suboptimum solution comparing to the optimum maximum likelihood algorithm, it is still complex for iterative systems because a large number of matrix inversions need to be computed for each combination of symbol, user, and iteration indices. Embodiments can enable a smooth transition from the MMSE detection with full complexity to the simplest matched filter solution over iterations, thereby achieving complexity reduction.

Embodiments may determine whether recursive updates of, for example, a multi user detection filter, are effective by means of determining a processing effort or complexity measure and an improvement or error measure of a receive symbol from a user. Therewith embodiment may determine when an update will be effective and when an update is not effective. Embodiment can achieve significant complexity reductions by skipping non-effective updates.

Embodiment can be also applied to many other areas such as equalization problems of frequency selective channels or detection of spatially multiplexed data streams, i.e. equalization in the spatial domain.

Embodiments may make use of complexity reduction in the dimension of iterations, in the following denotes by the iteration index q. Basically, there are three tasks for, for example, a multiuser detector, subtraction of MAI/ISI by exploiting the a priori information from the decoders, mitigate the residual interferences by the MMSE filtering, and then compute LLRs to the decoders. Thus, it should be intuitively clear that necessary detection efforts for mitigation of residual interferences may become less and less as the quality of soft information from decoders improves over iterations, which is taken advantage of by embodiments. If the a priori information from the decoders is perfect, then all the residual interferences can be canceled out. In that case the MMSE filter is equivalent to a matched filter (MF) which does not require any matrix inversion.

There are several approaches switching between the MMSE and MF solutions according to certain criteria, e.g. in M. Tüchler, R. Koetter, and A.C. Singer, "Turbo equalization: Principles and new results", IEEE Transactions on Communications, vol. 50, no. 5, pp. 754-767, May 2002. Another interesting approach provided by D.N. Liu and M.P. Fitz realizes more smooth transition between the MMSE and MF solutions by the recursive computation of filter with certain threshold. Embodiments may use an extension of D.N. Liu and M.P. Fitz, "Low complexity linear MMSE detector with recursive update algorithm for iterative detection-decoding MIMO OFDM System", in Proc. IEEE Wireless Communications and Networking Conference (WCNC2006), vol. 2, April 2006, pp. 850-855, by a differential mechanism and a new hybrid technique. Embodiments may enable large complexity reduction, possibly at the expense of higher memory requirements.

Embodiments of the present invention will be described in detail using the accompanying figures, in which

Fig. 1a shows an embodiment for an apparatus for providing probability measures;

Fig. 1b shows another embodiment of an apparatus for providing probability measures;

Fig. 2a shows an example of a transmitter;

Fig. 2b shows another embodiment for an apparatus for providing probability measures;

Fig. 2c illustrates an example of a system comprising two transmitters and a receiver with an embodiment;

Fig. 2d shows a complexity illustration of a coupling measure update;

Fig. 2e illustrates the principle of multi user detection algorithm;

Fig. 2f illustrates complexity efforts of different detection algorithms;

Fig. 2g shows complexity reduction from an embodiment;

Fig. 2h shows complexity reduction from an embodiment;

Fig. 2i illustrates the principle of an embodiment using a hybrid approach;

Fig. 2j shows a comparison of complexity efforts of different algorithms;

Fig. 3 shows simulations results for the BER (BER = Bit-Error-Rate) performance results for different numbers of iterations;

Fig. 4 shows simulations results for the average number of outer products computed over 20 iterations;

Fig. 5 shows simulations results for the performance of weak users and strong users; and

Fig. 6 shows simulations results comparing complexities.

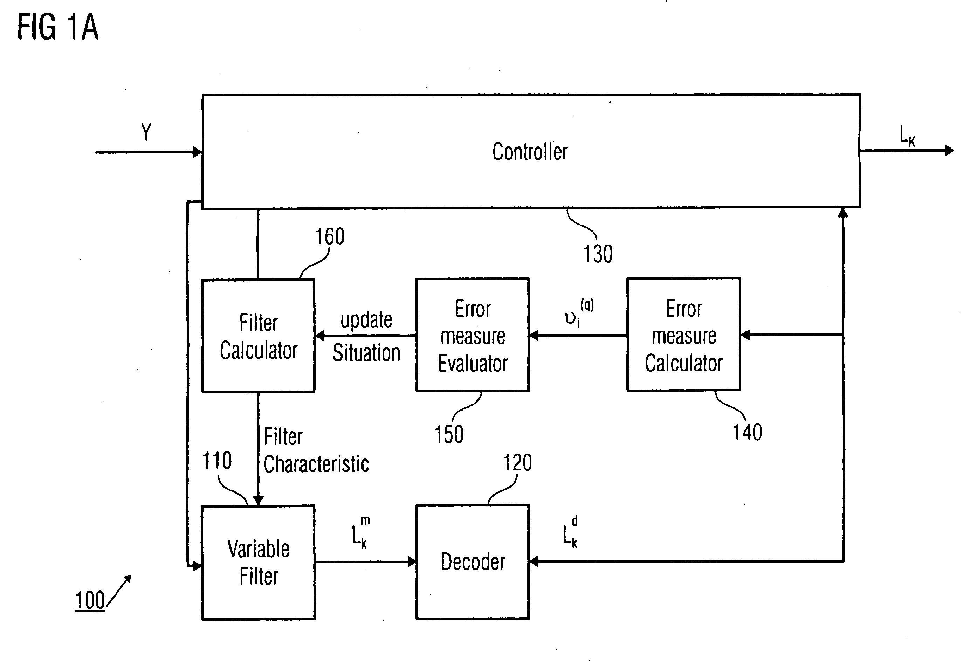

In the following an embodiment will be described in detail. Fig. 1a shows an embodiment for an apparatus 100 for providing probability measures. The apparatus 100 is adapted for providing probability measures $L_k$ for an estimated

user signal $\hat{\mathbf{x}}_k$ from a received signal $\mathbf{y}$, the received signal $\mathbf{y}$ comprising multiple user signals $\mathbf{x}_k, k=1..K$, and a noise signal $\eta$.

The apparatus 100 comprises a variable filter 110 for filtering the receive signal $\mathbf{y}$ as an input signal using a variable filter characteristic based on a coupling measure $\mathbf{C}$ of the multiple user signals $\mathbf{x}_k$ to obtain a filtered received signal comprising probability measures $L_k^m$ on the estimated user signal $\hat{\mathbf{x}}_k$. The apparatus 100 comprises a decoder 120 for decoding the filtered received signal on the basis of a decoding rule to obtain a processed received signal comprising processed probability measures $L_k^d$ of the estimated user signal $\hat{\mathbf{x}}_k$. Furthermore, the apparatus 100 comprises a controller 130 for controlling the variable filter 110 and the decoder 120 in an iterative manner such that the processed received signal is provided to the variable filter 110 as the input signal. In other words the controller 130 may control the variable filter 110 and the decoder 120 such that they run in a loop, in which the outputs of one component is coupled to the input of the other. Therewith, the processed received signal may be input to the variable filter 110 for iterating.

The apparatus 100 further comprises an error measure calculator 140 for calculating an error measure $v_i^{(q)}$ on the estimated user signal $\hat{\mathbf{x}}_k$ based on the processed received signal in an iteration $q$ and an error measure evaluator 150 for determining an update situation of the filter based on a change $\delta$ of the error measures $v_i^{(q)}$ and $v_i^{(q-1)}$ of subsequent iterations. In other words, the error measure calculator 140 can be adapted for calculating an error measure, for example in terms of a symbol variance or a relation between a symbol variance and a spectral noise density. The error measure evaluator 150 can then, for example, compare the error measure to a threshold, respectively an error measure change or a differential error, and therewith determine when an update would be effective and if so, detect an update information.

The apparatus 100 further comprises a filter calculator 160 for calculating an updated filter characteristic when the error measure evaluator has determined an update situation and the controller 130 is further adapted for providing the probability measure $L_k$ for the estimated user signal.

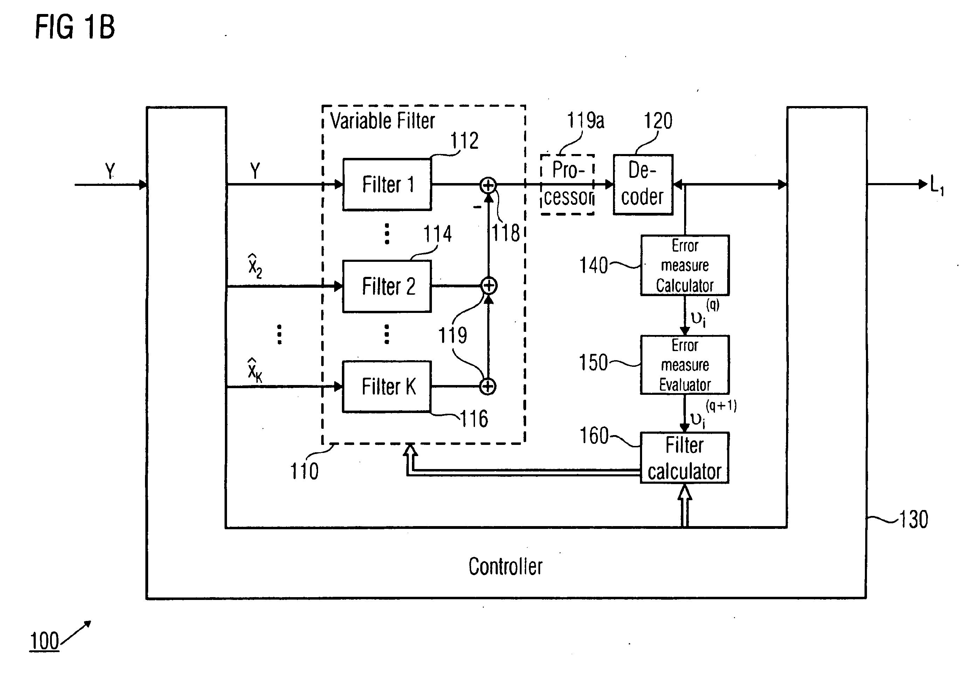

Fig. 1b shows another embodiment of an apparatus 100 for providing probability measures. The controller 130 receives the receive signal and can provide same to the variable filter 110. As shown in the figure the variable filter 110 may comprise subfilters 112, 114, 116. In the example considered in Fig. 1b the variable filter 110 is a multi user detection filter for trying to eliminate other users' interference from the receive signal. As can be seen from the figure the controller may provide estimates $\hat{\mathbf{x}}_k$ or probability information on user signal. In the example user 1 is considered as the desired user, which is why the controller 130 provides user signals for user 2..K as interferers to be cancelled.

In the variable filter 110 it can be seen that each user's signal gets filtered and the outputs of the subfilters are added 119 before being subtracted 118 from the filtered receive signal. Again the variable filter 110 and the subfilter 112, 114, 116 operation may be based on probability information of signals rather than on estimates. Optionally, there may be a processor 119a at the output of the variable filter 110 for computing extrinsic probability measures on the basis of the output of the variable filter. The output of the decoder 120 is then provided to the controller 130 and the error measure calculator 140. The error measure calculator 140 then calculates an error measure based on the output of the decoder 120. The error measure evaluator 150 then evaluates the error measure or error measure changes for example by threshold comparison and may then detect an update situation.

The error measure evaluator can, if an update situation was detected, trigger the filter calculator 160 for updating the filter characteristic of the variable filter 110. The filter calculator 160 may calculate the update based on multiple other signals, as the receive signal, estimates of user signals, probability information, etc. The multiple other signals can be provided by the controller 130, which is indicated by the double arrow in Fig. 1b. The filter calculator 160 can then update the variable filter 110, also indicated with an double arrow in Fig. 1b.

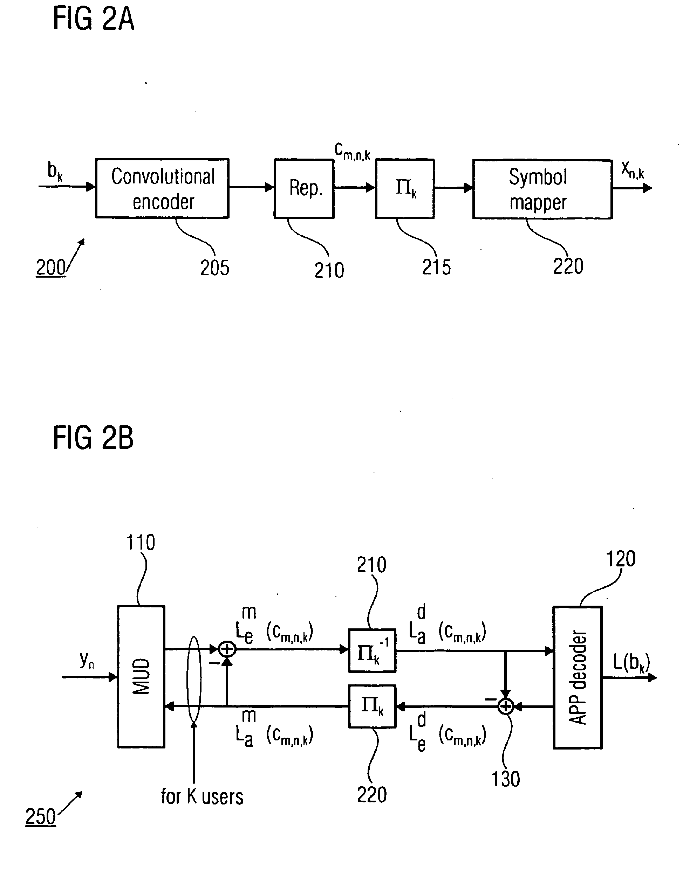

Fig. 2a shows an example of a transmitter 200. At the transmitter 200, information bits $b_k$ of user $k, k = 1,...,K,$ are encoded by a rate $R_c$ convolutional code followed by a rate $R$, simple repetition code. The resulting code bits $c_{m,n,k}$ are interleaved by the interleaver 220 $\Pi_k$ and then, mapped onto the complex symbols $x_{n,k}$ that are taken from the $2^M$-ary symbol alphabet $A = \{\alpha_1,...,\alpha_{2^M}\}$ where it is assumed $\sum_{m=1}^{2^M} \alpha_m = 0$ and unit energy $\sum_{m=1}^{2^M} \left|\alpha_m{}^2\right| = 1$. Note that $c_{m,n,k}$ denotes the m-th bit of the n-th transmit symbol $x_{n,k}$ which may also often be called "chip" by following the CDMA convention.

In the following the transmitter and receiver structures of an IDMA system are considered. However, it should be noted that embodiments of the present invention are not limited to IDMA systems. Embodiments may also be applied to many other areas such as equalization problems of frequency selective channels or detection of spatially multiplexed data streams (i.e. equalization in the spatial domain).

Similar system models for CDMA Systems can be found, e.g. by X. Wang and H. V. Poor or K. Kusume and G. Bauch, "CDMA and IDMA: Iterative multiuser detections for near-far asynchronous communications", in Proc. IEEE Int. Symposium on Personal, Indoor and Mobile Radio Communications (PIMRC 2005), vol. 1, September 2005, pp. 426-431, and were embodiments of the present invention may be applied to as well.

In this embodiment the controller 130 can be adapted for modeling the channel or radio channel as an order $L$ finite length impulse response filter $\sum_{\ell=0}^{L} g_{\ell,k} \delta[n-\ell]$ which has the normalized energy of $\sum_{\ell=0}^{L} E\left\{|g_{\ell,k}|^2\right\} = 1$ where E{·} denotes expectation. Then, the received signal can be expressed as

$$y_n = \sum_{k=1}^{K} \sum_{\ell=0}^{L} g_{\ell,k} x_{n-\ell,k} + \eta_n , \qquad (1)$$

where $\eta_n$ is a zero-mean complex Gaussian noise with a variance of $N_0/2$ per real dimension. Now, a sliding window model for the detection of a symbol at time n is considered as follows:

$$\mathbf{y}_n = \mathbf{H}\mathbf{x}_n + \boldsymbol{\eta}_n , \qquad (2)$$

Where

$$\mathbf{y}_n = [y_n, ..., y_{n+L}]^T , \quad \boldsymbol{\eta}_n = [\eta_n, ..., \eta_{n+L}]^T$$

and

$\mathbf{x}_n = [x_{n-L,1}, ...x_{n-L,K}, ..., x_{n,1}, ..., x_{n,K}, ..., x_{n+L,1}, ..., x_{n+L,K}]^T$ is defined. $(\cdot)^T$ denotes the transposition. By defining $\mathbf{g}_\ell^T = [g_{\ell,1}, ..., g_{\ell,K}]$, the channel matrix $\mathbf{H}$ of dimension $(L+1)\times(2L+1)K$ reads as

$$\mathbf{H} = \begin{bmatrix} \mathbf{g}_L^T & \cdots & \mathbf{g}_0^T & & \\ & \ddots & \vdots & \ddots & \\ & & \mathbf{g}_L^T & \cdots & \mathbf{g}_0^T \end{bmatrix} . \qquad (3)$$

It is also useful to define the partition of the channel matrix:

$$\mathbf{H} = [\mathbf{H}_{n-L}...\mathbf{H}_n...\mathbf{H}_{n+L}] , \qquad (4)$$

where $\mathbf{H}_n$ has the dimension $(L+1)\times K$ and

$$\mathbf{H}_n = [\mathbf{h}_{n,1}...\mathbf{h}_{n,K}] . \qquad (5)$$

Then, (2) can be rewritten in the column-wise form:

$$y_n = \sum_{\ell=-L}^{L} \sum_{k=1}^{K} \mathbf{h}_{n-\ell,k} \mathbf{x}_{n-\ell,k} + \boldsymbol{\eta}_n \; . \qquad\qquad (6)$$

Fig. 2b shows another embodiment for an apparatus 100 for providing probability measures in a receiver 250. At the receiver 250, a variable filter 110 is implemented as an MUD (Multi User Detector) and $K$ user-independent decoders 120 implemented as APP decoders (A Posteriori Probability) compute and exchange soft information or probability information as described as follows. The receiver 250 or the apparatus 100 therein, further comprises a first interleaver 210 for interleaving the filtered received signal comprising probability measures $L_k^m$ according to a first interleaving rule. Moreover, the receiver 250 or the apparatus 100 therein, further comprises a second interleaver 220 for interleaving the processed received signal before it is provided to the variable filter 110 as the input signal according to a second interleaving rule. In embodiments the first and second interleaving rules may be inverse to each other.

Fig. 2b further shows two subtractors 130 being part of the controller 130. In Fig. 2b the probability information exchanged between the variable filter 110 and the decoders 120 refers to extrinsic information, which can be used in embodiments. Moreover in Fig. 2b it is shown, that the in- and output of the variable filter 110 refers to K users.

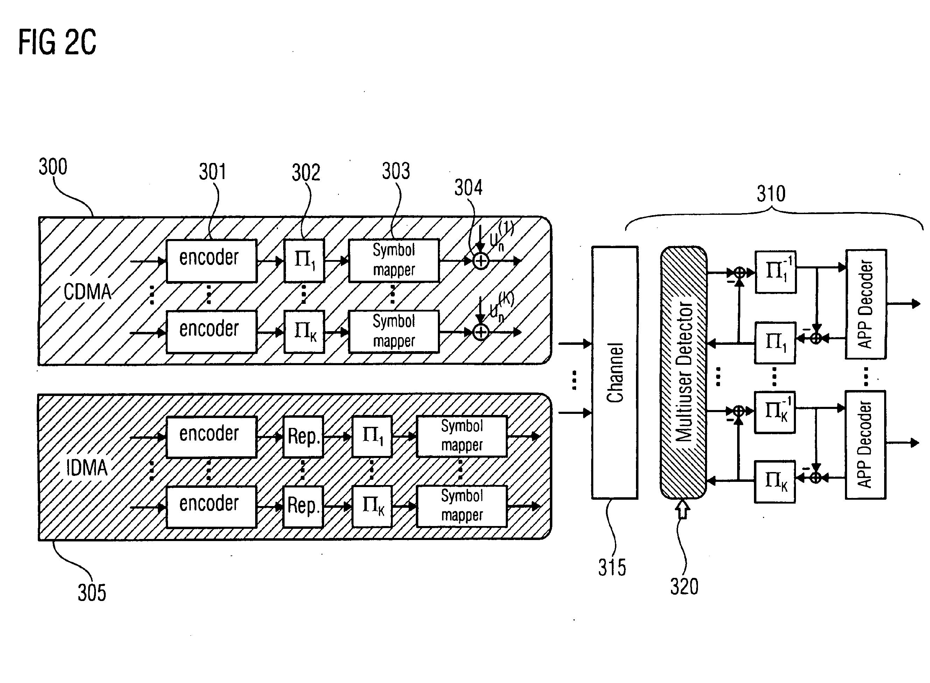

Fig. 2c illustrates an example of a system comprising either transmitter 300 or 305 and a receiver 310 with an embodiment. The transmitter 300 corresponds to a CDMA transmitter. The CDMA transmitter comprises, an encoder 301, an interleaver 302, a symbol mapper 303 and a spreader 304, where the signal is multiplied by a user specific spreading sequence $u_n^{(k)}, k = 1..K$ . The transmitter 305 corresponds to a IDMA transmitter 200 according to the above description. The receiver 310 corresponds to the above-described receiver 250, where multiple branches are shown for multiple users. Between the transmitters 300, 305 and the receiver 310 there is a mobile radio channel 315. As indicated in Fig. 2c the receiver carries out MUD 320, which will be illuminated in detail in the following. For MUD MMSE may be considered. As already mentioned above, conventional MMSE detection may still be of high complexity, although its complexity may be lower than that of Maximum Likelihood detection; however, matched filtering may be insufficient.

At the beginning, the decoders 120 are inactive and the MUD 110 may compute an a posteriori log-likelihood ratio (L-values) which reads as:

$$
\begin{aligned}
L^m\big(c_{m,n,k}\big) &= \log \frac{P\{c_{m,n,k}=+1|y_n\}}{P\{c_{m,n,k}=-1|y_n\}} \\
&= \log \frac{\sum_{x \in A_m^+} P(y_n|x_{n,k}=x)P(x_{n,k}=x)}{\sum_{x \in A_m^-} P(y_n|x_{n,k}=x)P(x_{n,k}=x)} \; .
\end{aligned}
\qquad\qquad (7)
$$

where $P\{c_{m,nk}=\pm 1|y_n\}$ is the conditional probability that the code bit was transmitted given the received sequence $y_n$. In embodiments the probability measures may comprise log-likelihood-ratios for the estimated user signals $\hat{\mathbf{x}}_x$. In embodiments all kinds of different encoding rules may be used, for example a decoder 120 can be adapted for using a decoding rule according to a convolutional or Low-Density-Parity-Check-code. The probability information may also be called L-value in the following.

$A_m^+$ denotes the set of all constellation points where the m-th bit is +1 and $A_m^-$ the set of all constellation points where the m-th bits is -1. Embodiments can address how to approximately and efficiently compute $P\{y_n|x_{n,k}=x\}$ in (7) using MMSE filtering, which will be described in the subsequent sections. The a priori probability of the symbol $P\{x_{n,k} = x\}$ is computed from the a priori probabilities of the code bits $P\{c_{m,m,k} = d_m\}$ where $d_m \in \{+1,-1\}$ denotes the m-th bit of the symbol $x$. Under the assumption that the code bits are uncorrelated due to the interleavers, 210,220, it can be computed

$$P\{x_{n,k} = x\} = \prod_{m=1}^{M} P\{c_{m,n,k} = d_m\} , \qquad\qquad (8)$$

where $P\{c_{m,n,k} = d_m\}$ is computed from the L-value sent from the decoder 120:

$$P\{c_{m,n,k} = d_m\} = \frac{1}{2}(1 + d_m \tanh(L_a^m(c_{m,n,k})/2)) ,\qquad (9)$$

and $L_a^m(c_{m,n,k})$ is initialized to 0 before the first iteration. From the a posteriori L-values $L^m(c_{m,n,k})$, the extrinsic information $L_e^m(c_{m,n,k})$ is computed by a bit-wise subtraction of the a priori L-values $L_a^m(c_{m,n,k})$, which can be carried out by the controller 130. The extrinsic L-values are sent to the decoder 120 as the a priori L-values $L_a^d(c_{m,n,k})$ after they are deinterleaved by $\Pi_k^{-1}$.

The decoder 120 computes improved a posteriori L-values $L^d(c_{m,n,k})$ as part of the processed receive signal about the code bits and $L(b_k)$ about the information bits from the a priori L-values $L_a^d(c_{m,n,k})$ taking into account the code constraints. At first, the repetition code is decoded by summing up every $1/R_r$ L-values, cf. D. Divsalar and F. Pollara, "Hybrid concatenated codes and iterative decoding", California Institute of Technology, Pasadena, California, Tech. Rep. TDA Progress Report 42-130, 1997.

Then, the convolutional code is decoded which can be based on the BCJR algorithm, cf. L. R. Bahl, J. Cocke, F. Jelinek, and J. Raviv, "Optimal decoding of linear codes for minimizing symbol error rate", IEEE Trans. on Info. Theory, vol. 20, no. 2, pp. 284-287, March 1974. The output L-values from the decoder 120 of the convolutional code are repeated $1/R_r$ times due to the repetition code. The a priori L-values $L_a^d(c_{m,n,k})$ are subtracted from the resulting a posteriori L-values $L^d(c_{m,n,k})$ to get the extrinsic L-values $L_e^d(c_{m,n,k})$, which are sent to the MUD 110 as the a priori L-values $L_a^m(c_{m,n,k})$ after they are interleaved by $\Pi_k$, as it is also indicated in Fig. 2a. In turn, the MUD 110 computes and delivers new L-values $L_e^m(c_{m,n,k})$ based on the received sequence $y_n$ and the a priori L-values $L_a^m(c_{m,n,k})$ from the decoders 120. The error performance can be improved by performing iterations. Finally, taking the sign of the L-values $L(b_k)$ gives the estimates of the information bits.

In the MMSE approach, the probability $P\{\mathbf{y}_n|x_{n,k} = x\}$ in (7) is approximated by $P\{\hat{x}_{n,k}|x_{n,k} = x\}$ where $\hat{x}_n$ is a linear MMSE filter output as the estimate of $x_n$. The MMSE filter or the variable filter 110 can be adapted for outputting

$$\hat{x}_{n,k}^{(q)} = \mathbf{w}_{n,k}^{(q)H} \widetilde{\mathbf{y}}_{n,k}^{(q)} ,\qquad (10)$$

where the superscript $q$ is introduced to indicate that the variables are computed at $q$-th iteration, $q \in \{0,...,Q\}$. $\widetilde{\mathbf{y}}_{n,k}^{(q)}$ results from the soft interference cancellation, cf. (6),

$$\widetilde{\mathbf{y}}_{n,k}^{(q)} = \mathbf{y}_n - \sum_{\ell \neq 0 \wedge k' \neq k} \mathbf{h}_{n-\ell,k'} \bar{x}_{n-\ell,k'}^{(q)} ,\qquad (11)$$

and

$$\bar{x}_{n,k}^{(q)} = \mathrm{E}\{x_{n,k}\} = \sum_{x \in A} x P\{x_{n,k} = x\}\qquad (12)$$

is the symbol estimate at $q$-th iteration computed from the extrinsic L-values sent from the decoder 120, compare (8) and (9).

The MMSE filter is given for example in, X. Wang and H. V. Poor, in M. Tüchler, A.C. Singer, and R. Koetter, "Minimum mean squared error equalization using a priori information", IEEE Transactions an Signal Processing, vol. 50, no. 3, pp. 673-683, March 2002, or in D.N. Liu and M.P. Fitz. In embodiments the filter calculator 160 can be adapted for determining an MMSE filter characteristic, it can be written as

$$\mathbf{w}_{n,k}^{(q)} = \frac{1}{1 + \mathbf{h}_{n,k}^{H} \mathbf{C}_{n}^{(q)^{-1}} \mathbf{h}_{n,k}} \mathbf{C}_{n,k}^{(q)^{-1}} \mathbf{h}_{n,k} \, , \qquad (13)$$

wherein $\mathbf{C}_{n}^{(q)^{-1}}$ and $\mathbf{C}_{n,k}^{(q)^{-1}}$ are covariance matrices as coupling measures. The coupling measures may determine a coupling between the user signals in a system, in a radio channel respectively.

Furthermore, the filter calculator 160 may be adapted for determining the coupling measures according to

$$\begin{aligned} \mathbf{C}_{n}^{(q)} &= \mathrm{E}\left\{ \left( \mathbf{y}_{n} - \mathrm{E}\{\mathbf{y}_{n}\} \right) \left( \mathbf{y}_{n} - \mathrm{E}\{\mathbf{y}_{n}\} \right)^{H} \right\} \\ &= \mathbf{H}\mathbf{V}_{n}^{(q)}\mathbf{H}^{H} + N_{0}\mathbf{I} \end{aligned} \, , \qquad (14)$$

$$\mathbf{C}_{n,k}^{(q)} = \mathbf{C}_{n}^{(q)} - \upsilon_{n,k}^{(q)}\mathbf{h}_{n,k}\mathbf{h}_{n,k}^{H} \, , \qquad (15)$$

$$\begin{aligned} \mathbf{V}_{n}^{(q)} &= \mathrm{E}\left\{ \left( \mathbf{x}_{n} - \bar{\mathbf{x}} \right)\left( \mathbf{x}_{n} - \bar{\mathbf{x}} \right)^{H} \right\} \\ &= \mathrm{diag}\left\{ \upsilon_{n-L,1}^{(q)}, \ldots, \upsilon_{n-L,K}^{(q)}, \ldots, \upsilon_{n,1}^{(q)}, \ldots, \upsilon_{n,K}^{(q)}, \ldots, \upsilon_{n+L,1}^{(q)}, \ldots, \upsilon_{n+L,K}^{(q)} \right\} \end{aligned} , \qquad (16)$$

$$\begin{aligned} \bar{\mathbf{x}}_{n}^{(q)} &= \mathrm{E}\{\mathbf{x}_{n}\} \\ &= \left[ \bar{x}_{n-L,1}^{(q)}, \ldots, \bar{x}_{n-L,K}^{(q)}, \ldots, \bar{x}_{n,1}^{(q)}, \ldots, \bar{x}_{n,K}^{(q)}, \ldots, \bar{x}_{n+L,1}^{(q)}, \ldots, \bar{x}_{n+L,K}^{(q)} \right]^{T} \end{aligned} , \qquad (17)$$

and $\upsilon_{n,k}^{(q)} = \sum_{x \in A} |x|^{2} P\{x_{n,k} = x\} - \left|\bar{x}_{n}^{(q)}\right|^{2}$. Assuming that the variable filter 110 output in (10) is Gaussian distributed, $P\{\hat{x}_{n,k}|x_{n,k} = x\}$ is fully characterized by its mean value and variance which can be considered by the filter calculator 160 respectively computed as

$$\mu_{n,k}^{(q)} = \mathrm{E}\left\{ \hat{x}_{n,k}^{(q)} \Big| x_{n,k} = x \right\} = \frac{\mathbf{h}_{n,k}^{H}\mathbf{C}_{n,k}^{(q)^{-1}}\mathbf{h}_{n,k}}{1 + \mathbf{h}_{n,k}^{H}\mathbf{C}_{n,k}^{(q)^{-1}}\mathbf{h}_{n,k}} x \quad , \qquad (18)$$

and

$$v_{n,k}^{(q)} = E\left\{\left|\hat{x}_{n,k}^{(q)} - \mu_{n,k}^{(q)}\right|^2 \middle| x_{n,k} = x\right\}$$
$$= \frac{\mathbf{h}_{n,k_{n,k}}^{H\,(q)}\mathbf{C}_{n,k}^{(q)^{-1}}\mathbf{h}_{n,k}}{\left(1 + \mathbf{h}_{n,k}^{H}\mathbf{C}_{n,k}^{(q)^{-1}}\mathbf{h}_{n,k}\right)^2} \tag{19}$$

Then, it yields

$$P\left\{\hat{x}_{n,k}^{(q)}\middle| x_{n,k} = x\right\} = \frac{1}{\pi v_{n,k}^{(q)}} e^{\frac{\left|\mathbf{h}_{n,k}^{H}\mathbf{C}_{n,k}^{(q)^{-1}}\left(\tilde{y}_{n,k}^{(q)} - \mathbf{h}_{n,k}x\right)\right|^2}{\mathbf{h}_{n,k}^{H}\mathbf{C}_{n,k}^{(q)^{-1}}\mathbf{h}_{n,k}}} \tag{20}$$

that can be used as an approximation to $P\{y_n|x_{n,k} = x\}$ in (7) in embodiments.

A problem of the conventional MMSE approach is the required complexity, which translates to high processing expenditure. As can be seen from (20), the inversion of the co-variance matrix $\mathbf{C}_{n,k}^{(q)}$ has to be computed for each symbol $n \in \{1,...,N\}$, user $k \in \{1,...K\}$, and iteration $q \in \{0,...,Q\}$.

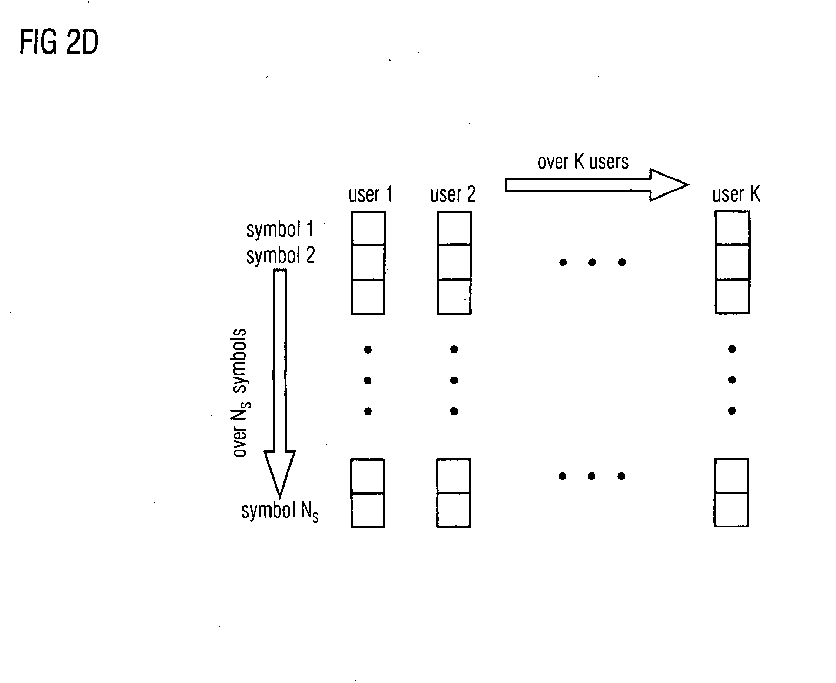

Fig. 2d shows a complexity illustration of a coupling measure update. In each iteration step q, for each user $k$, $k = 1..K$ and for each symbol $n \in \{1,...,N_S\}$ an inversion of a co-variance may be calculated, i.e. $KN_S$ matrix inversions per iteration step.

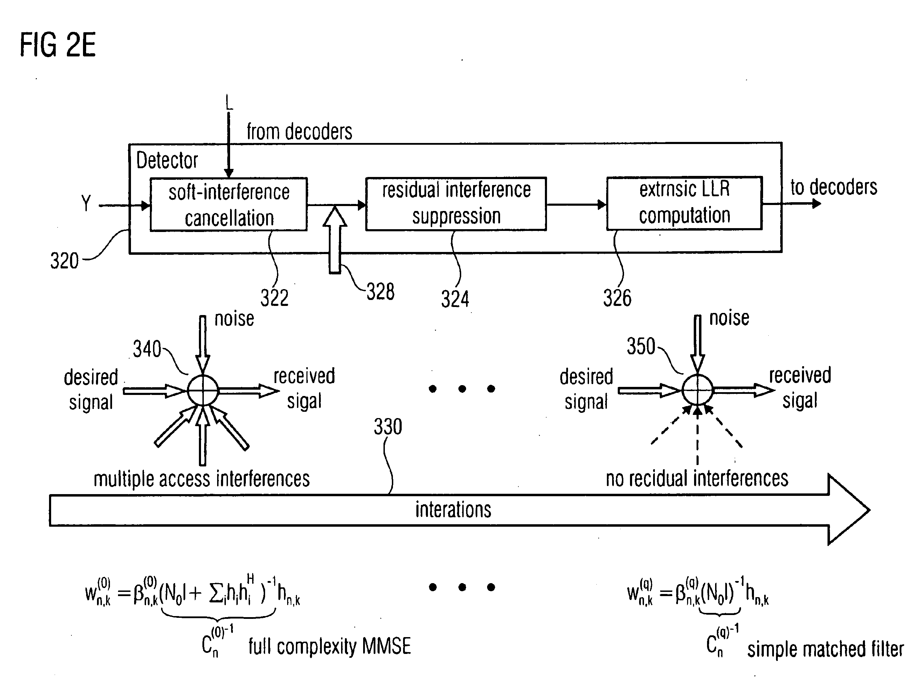

In order to provide another system overview, Fig. 2e illustrates the principle of a multi user detection algorithm. At the top of Fig. 2e a detector 320 is shown, carrying out soft-interference cancellation 322 based on a receive signal y and information from decoders L. The output signal is then applied to residual interference suppression 324 before extrinsic LLR are computed and output to the decoders. The arrow 328 indicates that after a sufficient number of iterations, low, and ideally none, residual interference may remain after the soft-interference cancellation.

In Fig. 2e the arrow 330 symbolizes a time line and the diagrams 340 and 350 illustrate the residual interference along the iterations. On the very left hand side, i.e. at the beginning of the iterations there is multiple access interference, i.e. the interference of other users is not suppressed efficiently 340. However, with progressing iterations, i.e. moving towards the right hand side of Fig. 2e residual interference is more and more suppressed, indicated by the dotted arrows on the right hand side of Fig. 2e. Consequently the complexity for calculating the filter characteristic at the beginning of the iterations is high, corresponding to full MMSE, where towards the end of the iterations complexity converges to that of a matched filter (MF), as indicated underneath the time line 330 in Fig. 2e. From there it already follows intuitively, that the complexity becomes lower the more iterations are carried out.

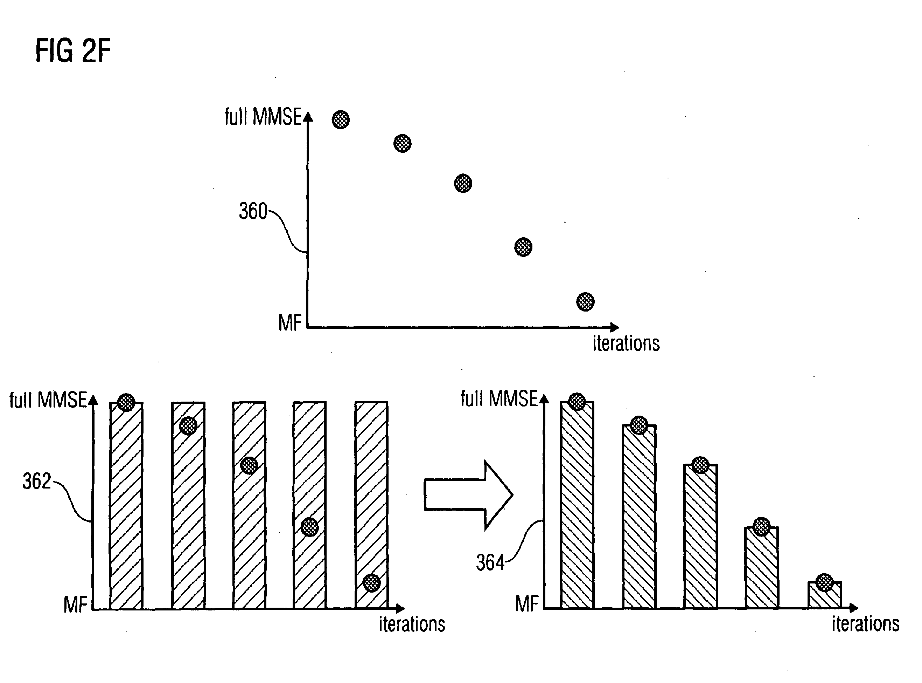

In the following a number of viewgraphs will be presented, which illustrate complexities versus the number of iterations. Fig. 2f shows three such viewgraphs 360, 362, 364, wherein the viewgraph 360 illustrates the above discussed intuitive decrease of complexity over the iterations. At the beginning the complexity is near that of full MMSE, after iterations have progressed it converges to that of MF. In Fig. 2f another viewgraph 362 is shown, showing the same indication as viewgraph 360 plus a bar chart indicating the complexity for full MMSE when no complexity reduction is applied. Viewgraph 364 shows the advantage of embodiments achieving a complexity reduction, in some embodiments right to the optimum.

There have been several research efforts to reduce the complexity, however, they succeeded only with limited success. Some conventional complexity reduction techniques are briefly reviewed in the following. One approach is for example user-wise complexity reduction. X. Wang and H. V. Poor have shown that the complexity for computing $K$ inversions of the covariance matrices can be partially shared. By applying the matrix inversion lemma to (15), it follows

$$\mathbf{C}_{n,k}^{(q)^{-1}} = \frac{1}{1 - v_{n,k}^{(q)}\mathbf{h}_{n,k}^{H}\mathbf{C}_{n}^{(q)^{-1}}\mathbf{h}_{n,k}}\mathbf{C}_{n}^{(q)^{-1}} \cdot \tag{21}$$

In embodiments the filter calculator 160 can be adapted for determining $\mathbf{C}_{n,k}^{(q)^{-1}}$ accordingly. Since $\mathbf{C}_{n}^{(q)^{-1}}$

is independent of $k$, cf. (14), it needs to be computed only once, then, $\mathbf{C}_{n,k}^{(q)^{-1}}$ for each $k$ is a scalar update from $\mathbf{C}_{n}^{(q)^{-1}}$. Because the computation of $\mathbf{h}_{n,k}^{H}\mathbf{C}_{n}^{(q)^{-1}}\mathbf{h}_{n,k}$ requires only second order complexity, while the direct computation of $\mathbf{C}_{n,k}^{(q)^{-1}}$ needs the third order, the computation can be reduced. Embodiments may make use of this complexity reduction.

In the following, embodiments which exploit this complexity reduction technique are considered and moreover embodiments may focus on the efficient computation of $\mathbf{C}_{n}^{(q)^{-1}}$ rather than $\mathbf{C}_{n,k}^{(q)^{-1}}$.

Another concept for reducing the complexity can be symbol-wise complexity reduction. M. Tüchler, A.C. Singer, and R. Koetter have presented a symbol-wise complexity reduction technique. Here, the complete algorithm is not reviewed but its rough idea is briefly explained. The entire algorithm is included by the above reference. The complexity reduction is realized based on the fact that, when partitioning the covariance matrices for the symbols $n$ and $n+1$ as

$$\mathbf{C}_{n}^{(q)} = \begin{bmatrix} a & \mathbf{a}^{H} \\ \mathbf{a} & \mathbf{A} \end{bmatrix} \ and \ \mathbf{C}_{n+1}^{(q)} = \begin{bmatrix} \mathbf{B} & \mathbf{b} \\ \mathbf{b}^{H} & b \end{bmatrix}, \tag{22}$$

then it holds that $\mathbf{A}=\mathbf{B}$ due to the Toeplitz structure of the channel matrix, cf. (3). Thus, sub-matrices of $\mathbf{C}_{n}^{(q)^{-1}}$ can be reused in order to compute $\mathbf{C}_{n+1}^{(q)^{-1}}$. In this way, the complexity reduction can be achieved in a recursive manner. Embodiments may not apply this complexity reduction technique if the special Toeplitz structure does not hold because of, for instance, time varying channels or scrambling codes of CDMA systems.

Embodiments may further carry out iteration-wise complexity reduction. For given symbol index $n$ and user index $k$, the complexity for computing $\mathbf{C}_{n}^{(q)^{-1}}$ is constant for different $q$, i.e. over iterations. The complexity reduction technique proposed by D.N. Liu and M.P. Fitz can reduce the complexity over iterations. In order to describe the idea and algorithm by D.N. Liu and M.P. Fitz, it is convenient to introduce new notations for $\mathbf{H}$ and $\mathbf{V}_{n}^{(q)}$ alternatively to (5) and (16), respectively, as follows

$$\mathbf{H} = \begin{bmatrix} \mathbf{h}_{1}, \mathbf{h}_{2}, \ldots, \mathbf{h}_{(2L+1)K} \end{bmatrix}, \tag{23}$$

$$\mathbf{V}_{n}^{(q)} = \mathrm{diag}\left\{ \upsilon_{1}^{(q)}, \upsilon_{2}^{(q)}, \ldots, \upsilon_{(2L+1)K}^{(q)} \right\}. \tag{24}$$

Then, (14) can be rewritten and the filter calculator 160 can be adapted for determining $\mathbf{C}_{n}^{(q)}$ according to

$$\mathbf{C}_{n}^{(q)} = \sum_{i=1}^{(2L+1)K} \upsilon_{i}^{(q)} \mathbf{h}_{i} \mathbf{h}_{i}^{H} + N_{0}\mathbf{I}. \tag{25}$$

One can show that the recursive outer product updates

$$\mathbf{\Phi}_{i} = \mathbf{\Phi}_{i-1} - \frac{\upsilon_{i}^{(q)}/N_{0}}{1+\upsilon_{i}^{(q)}/N_{0}\mathbf{h}_{i}^{H}\mathbf{\Phi}_{i-1}\mathbf{h}_{i}} \left(\mathbf{\Phi}_{i-1}\mathbf{h}_{i}\right)\left(\mathbf{\Phi}_{i-1}\mathbf{h}_{i}\right)^{H} \tag{26}$$

starting with $\Phi_0 = I$ results in $\mathbf{C}_n^{(q)^{-1}} = \Phi_{(2L+1)K} / N_0$, cf. D.N. Liu and M.P. Fitz. This recursive computation can be used by embodiments for reducing the complexity, which is explained in the following. Remember that $\upsilon_i^{(q)}$ is the variance of a symbol estimate computed from the extrinsic L-values sent from the decoder 120, cf. (12), (16), and (24). Therefore, $\upsilon_i^{(q)}$ becomes smaller and smaller, i.e. approaching zero, as the reliability of the L-values from the decoder 120 improves, i.e. the larger absolute L-values. That is usually the case as the number of iterations increases. Thus, the outer product update in (26) can be neglected for small values of $\upsilon_i^{(q)} / N_0$, i.e. embodiments may consider $\Phi_i \approx \Phi_{i-1}$ if $\upsilon_i^{(q)} / N_0 < \upsilon_{TH}$ with a properly chosen small threshold $\upsilon_{TH}$. Embodiments may therewith achieve a significant complexity reduction. The concept that may also be carried out by embodiments is further given using the following pseudo code:

$$\Phi_0 = I$$
$$for \ i = 1,\ldots,(2L+1)K$$
$$if \ \upsilon_i^{(q)} / N_0 < \upsilon_{TH} \ \ \Phi_i = \Phi_{i-1} \ \ else$$
$$\Phi_i = \Phi_{i-1} - \frac{\upsilon_i^{(q)}/N_0}{1+\upsilon_i^{(q)}/N_0 \mathbf{b}_i^H \Phi_{i-1}\mathbf{b}_i} (\Phi_{i-1}\mathbf{h}_i)(\Phi_{i-1}\mathbf{h}_i)^H$$
$$\mathbf{C}_n^{(q)^{-1}} = \Phi_{(2L+1)K} / N_0 \qquad ,$$

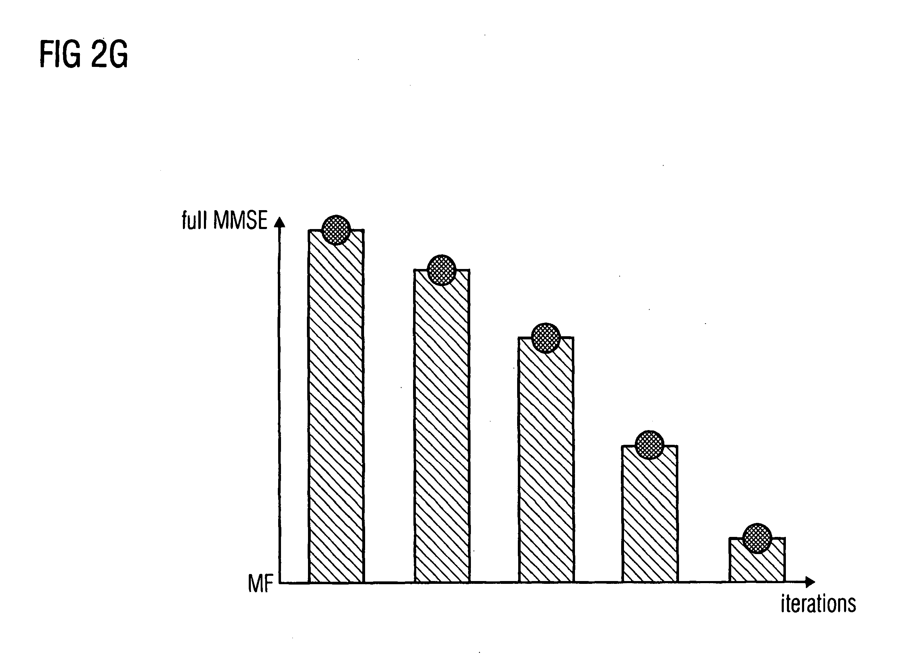

Fig. 2g shows a possible complexity reduction from such an embodiment using the above introduced viewgraph. It can be seen from Fig. 2g that the computation starts from MF and proceeds towards full MMSE as far as may be necessary therewith achieving complexity reduction.

Embodiments may further use a differential iteration-wise complexity reduction approach, which is an extension of the approach by D.N. Liu and M.P. Fitz explained above. The idea of the new approach, which may be carried out by embodiments, is exploiting the result from the previous iteration in order to update the current one. For a detector, the difference at the current iteration comparing to the previous one shows in the extrinsic L-values sent from the decoder 120. The reliability of an L-value can be translated to that of a symbol estimate, which can be seen from the variance of symbol estimate $\upsilon_i^{(q)}$. Therefore, the algorithm explained above can be extended such that the recursive update starts with the result from the previous iteration and the update is performed only when the difference of the variance $\delta = \upsilon_i^{(q)} - \upsilon_i^{(q-1)}$ is significant. Embodiments may therewith achieve a significant complexity reduction when compared to the conventional approaches. The concept that may be carried out by embodiments is further given using the following pseudo code, explaining an embodiment of a novel differential recursive update algorithm:

$$if \quad q = 0 \ then \ \Theta_0 = I, \mathbf{V}_n^{(-1)} = 0 \ else$$
$$\Theta_0 = \mathbf{C}_n^{(q-1)^{-1}} / N_0$$
$$for \quad i = 1,\ldots,(2L+1)K$$
$$\delta = \upsilon_i^{(q)} - \upsilon_i^{(q-1)}$$
$$if \ |\delta| / N_0 < \upsilon_{TH} \ \ then \ \Theta_i = \Theta_{i-1} \ else$$
$$\Theta_i = \Theta_{i-1} - \frac{\delta/N_0}{1+\delta/N_0 \mathbf{b}_i^H \Theta_{i-1}\mathbf{b}_i} (\Theta_{i-1}\mathbf{h}_i)(\Theta_{i-1}\mathbf{h}_i)^H$$
$$\mathbf{C}_n^{(q)^{-1}} \quad = \Theta_{(2L+1)K} / N_0$$

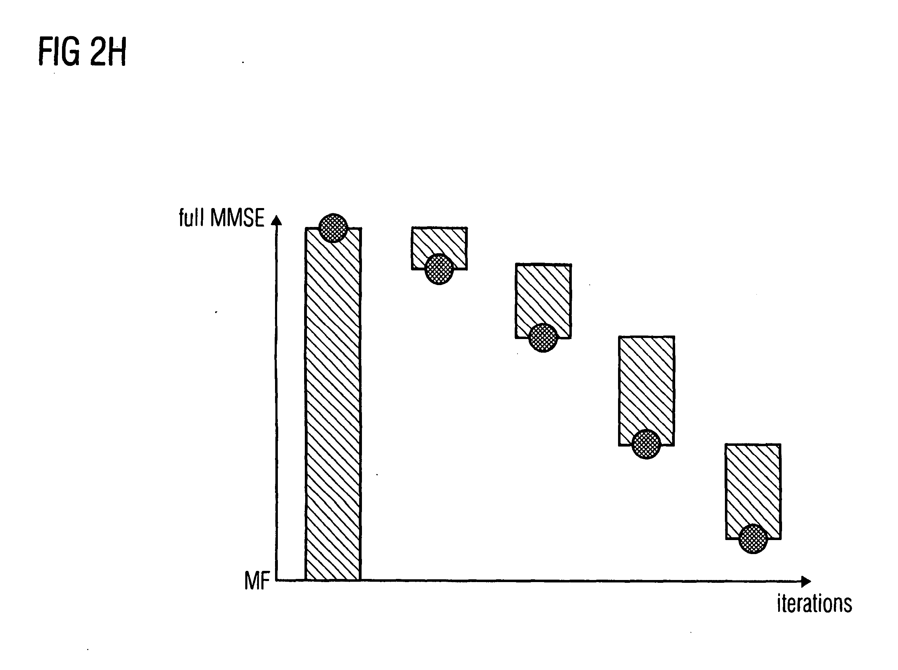

Fig. 2h shows complexity reduction from an embodiment according to the differential updating strategy using the same viewgraph. As can be easily seen, the algorithm does not start from the same point over and over again but uses the results from an earlier iteration to determine updates for the present iteration. The bar graph indicates the reduction in complexity. Embodiments can achieve extra complexity reduction by initialising with results from previous iterations rather than starting each iteration from the same point, and even more, by updating only when the variance difference is above a threshold. The recursive updating of embodiments, exploits previous results instead of starting form MF. Embodiment may not compute an update if the symbol variance does not change between iterations. Moreover embodiments may use a similar criteria as a stopping condition.

Embodiments can provide the advantage of a better computational efficiency. Due to the differential nature, no computation is needed if a symbol variance does not change. This typically occurs when a sufficient number of iterations have been performed so that there is no further performance improvement. That also suggests a new stopping criteria, which may be used by embodiments to terminate an iteration. Embodiments may stop the iterative processing if most variances did not change from the previous iteration. A threshold value can be introduced as a lower bound for the number of variance changes below the threshold, which may stop the iterative processing. In other words, the controller 130 may be adapted for stopping further iteration if a number of error measures $\upsilon_i^{(q)}$ or changes $\delta$ of error measures was below a threshold $n_{stop}$. The threshold $n_{stop}$ may equal 1%, 5%, 10%, 20%, 40%, 50%, 75%, 90%, 95%, 98% or 99% of (2L+1)K.

Furthermore, it can be typically observed that the performance improvements are not large in the first and last few iterations and in that case, the differential update is more efficient than the non-differential one.

The proposed algorithm may use extra memory. Additional memory may be necessary to store matrices $\mathbf{C}_n^{(q)^{-1}}$ and variances $\upsilon_i^{(q)}$ for the next iteration $q$+1, compare the above pseudo code. When the number of symbols within each transmission block is denoted by $N$, then $KN$ real values may be stored for the variances. For each matrix, $L^2+2L+1$ real values have to be stored for every symbol index n. Thus, $N(L^2+2L+1)$ real values may be stored when the differential update algorithm is applied for all N symbols.

Embodiments can achieve a potential complexity reduction gain, which is significantly large. The main complexity of the differential and non-differential algorithms arises from the outer product update which requires $12L^2+36L+26$ real-valued flops (floating point operations). Since there are (2L+1)K outer products, the maximum possible savings in real-valued flops for N symbols can be written as $N(24L^2+36L+26)N_s$, where $0 \leq N_s \leq (2 + 1)KQ$ is the number of outer products that can be saved over $Q$+1 iterations, no complexity reduction may be possible at the first iteration.

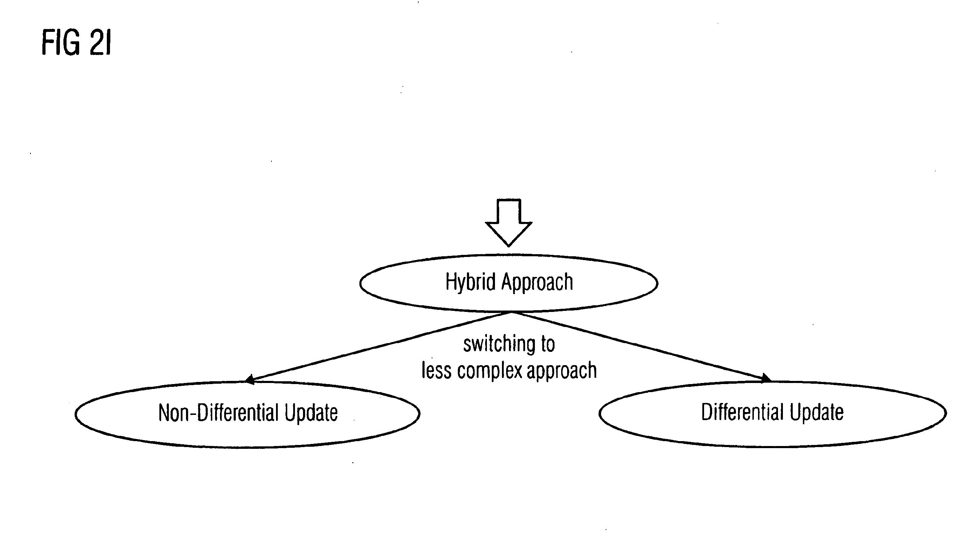

Thus, embodiments may switch to one of the differential and non-differential algorithms, whichever achieves larger $N_s$, i.e. whichever achieves lower complexity. Embodiments may carry out a switching strategy, i.e. a hybrid scheme. The decision on switching to either of the algorithms can be easily checked by embodiments by counting the number of the threshold conditions being fulfilled according to the above described algorithms and pseudo codes. Fig. 2i illustrates an embodiment using the switching or hybrid approach. Dependent on the required complexity the more efficient update between non-differential and differential is chosen.

In other words the controller 130 can be further adapted for determining $\mathbf{C}_n^{(q)^{-1}}$ based on the lower of first complexity measure referring to the non-differential approach and a second complexity measure referring to the differential approach. The first complexity measure may be determined by a number of $\upsilon_i^{(q)}/N_0 < \upsilon_{TH1}$ and the second complexity measure can be determined by a number of $\delta^{(q)} = \upsilon_i^{(q)} - \upsilon_i^{(q-1)}$ and $\left|\delta^{(q)}\right|/N_0 < \upsilon_{TH2}$ during an iteration $q$.

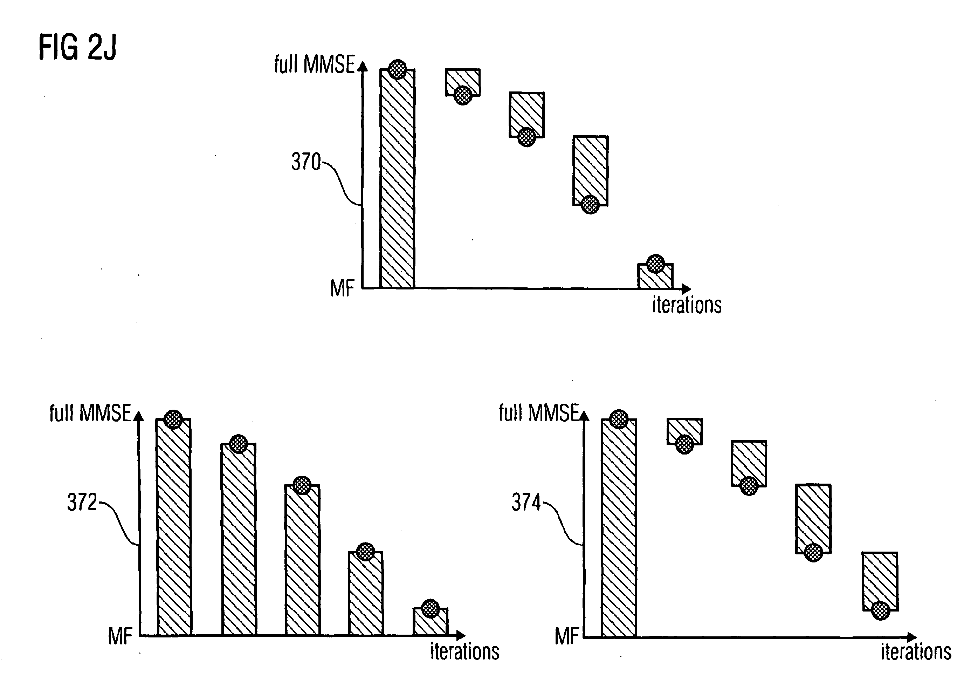

Fig. 2j shows three viewgraphs 370, 372, 374 as they were introduced above. The viewgraph 370 shows the complexity of an embodiment using the hybrid algorithm, 372 shows the complexity of an embodiment using the non-differential concept only and viewgraph 374 shows the complexity of an embodiment carrying out the differential concept only.

In the following computer simulation results will be presented, which compare the performance and complexity reduction between the conventional technique and embodiments. For simulation purposes an IDMA system with $K = 4$ users is assumed. Each user encodes 2498 information bits by the rate $R_c$ = ½ memory 2 standard $[7,5]_8$ convolutional code where a Trellis is terminated with 2 additional termination bits. The convolutionally encoded bits are further encoded by the rate $R_r$ = ¼ repetition code, then interleaved by the randomly chosen user-distinct interleavers of length 20000. The interleaved code bits are mapped on N = 5000 16QAM symbols using Gray labeling, and then transmitted over the channel.

Furthermore, randomly generated multipath channels with 20 taps are considered, which are generated from zero-mean complex Gaussian distribution with a uniform power delay profile, i.e. $E\{|g_{l,k}|^2\}=1/(L+1)=1/20, \forall k$. The channel taps are assumed constant during each transmission block. The threshold value $\upsilon_{TH}$ can be chosen to balance a trade-off between performance and complexity. Larger values of $\upsilon_{TH}$ result in lower complexity, but the performance is also degraded. Here, a fixed value of $\upsilon_{TH} = 0.1$ is used, since no noticeable performance degradation was reported by D.N. Liu and M.P. Fitz.

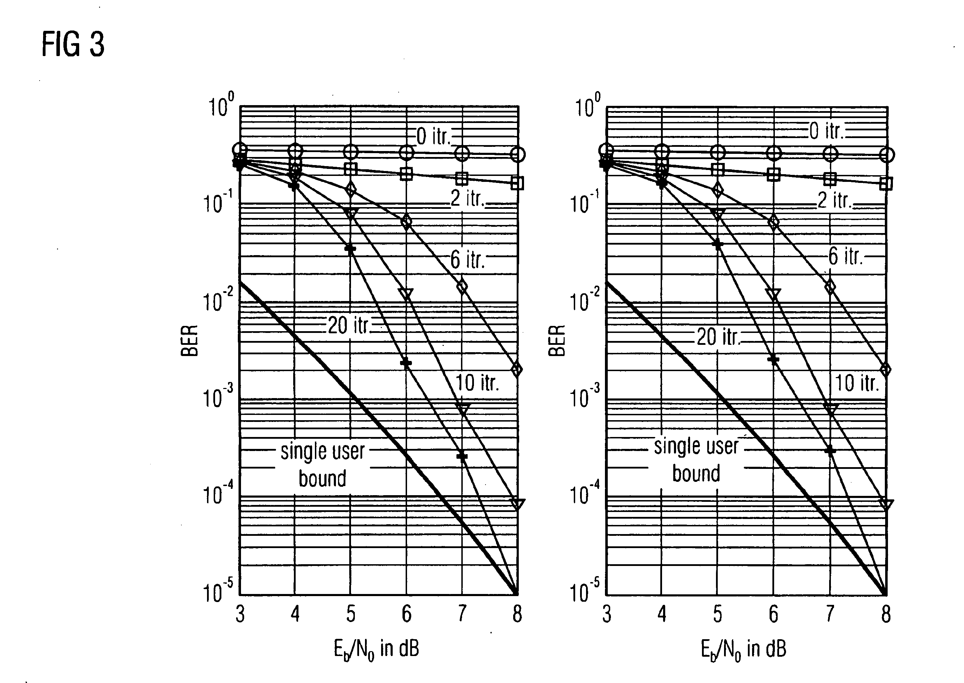

Fig. 3 shows simulations results for the BER (BER = Bit-Error-Rate) performance results for different numbers of iterations and versus different $E_b/N_0$, referring to bit energy over spectral noise density. Fig. 3 shows results for the differential scheme on the left and results for an embodiment carrying out the hybrid approach on the right. Fig. 3 illustrates the BER performance after several iterations by applying the non-differential, on the left in Fig. 3, and an embodiment using the hybrid scheme, on the right of Fig. 3. No performance difference between these two schemes can be observed.

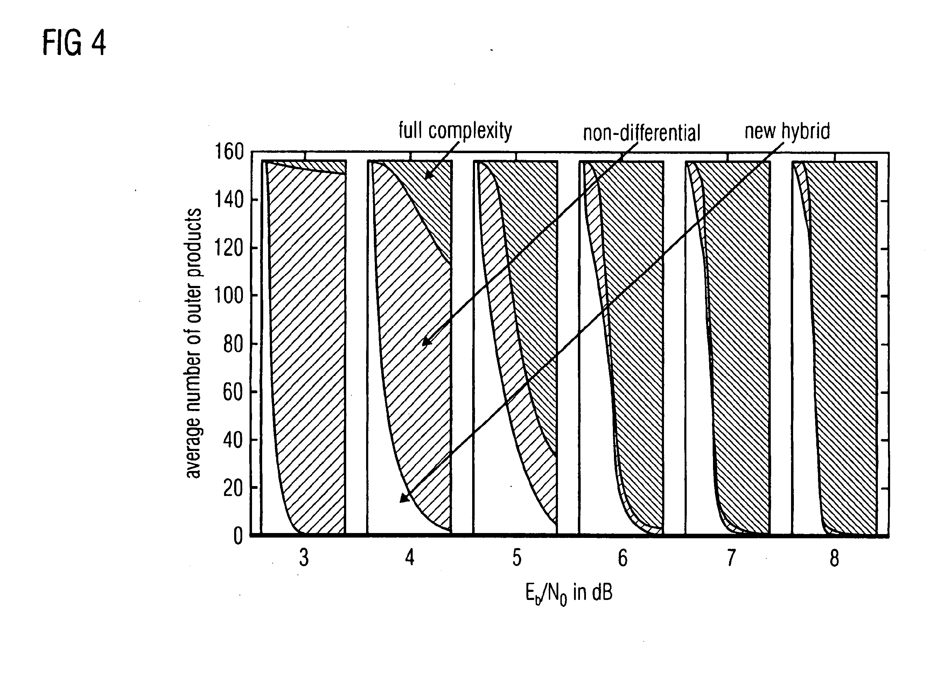

Fig. 4 shows simulations results for the average number of outer products computed over 20 iterations versus $E_b/N_0$ in dB. Fig. 4, however, depicts the difference in the average number of outer products which are performed over 20 iterations at a number of $E_b/N_0$ values. The number of outer products computed at each $E_b/N_0$ is plotted iteration by iteration; starting from left to right. On the very left hand side indicated in dark bars, the results for an embodiment using the hybrid scheme are indicated, in the center using slightly lighter bars the results for the non-differential approach and on the respective right hand side results for the full complexity approach are indicated.

Since the channel matrix has $(2L+1)K=156$ columns, at maximum 156 outer products have to be performed in the case of no complexity reduction. The following table summarizes the simulation results on the complexity reduction over 20 iterations per symbol by the embodiment using the hybrid approach with respect to the non-differential scheme by D.N. Liu and M.P. Fitz.

| $E_b/N_0$ | 3 dB | 4 dB | 5 dB | 6 dB | 7 dB | 8 dB |
|---|---|---|---|---|---|---|
| Ratio | 85% | 73% | 42% | 18% | 10% | 6% |
| flops | 1.2E07 | 9.6E06 | 3.9E06 | 1.1E06 | 4.4E05 | 2.4E05 |

It can be observed that the embodiment provides much less complexity than the non-differential one. As discussed above, $L^2+2L+1=400$ real values have to be stored for each symbol. Depending on available memory of a system, the hybrid approach may be applied to $N'$ symbols. At the expense of the increased memory, i.e. 400N' real values need to be stored, however, the number of flops in the above table that can be saved also increases by a factor of $N'$, up to $N = 5000$ with the present simulation setup. Therefore, embodiments using the hybrid approach can provide flexible trade-off between the complexity reduction and memory requirement.

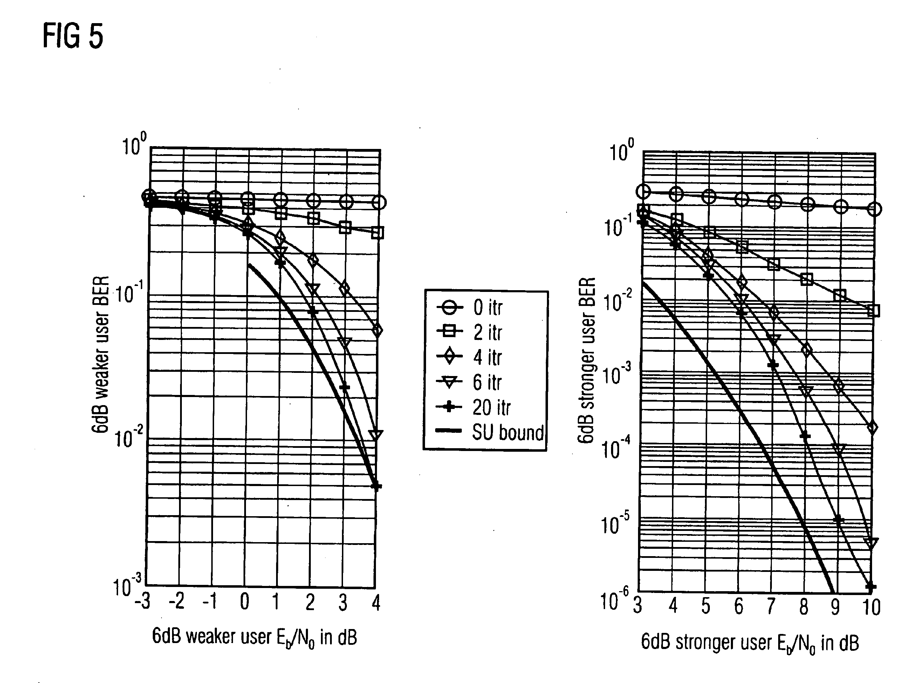

In the following simulation results will be presented for the same system in a slightly different scenario. The transmit power of two users are now set 6dB weaker than the transmit powers of the other two users. Fig. 5 shows the performance of the weak users on the left hand side and the strong users on the right hand side. Fig. 5 depicts simulation result in terms of BER versus $E_b/N_0$ for different numbers of iterations.

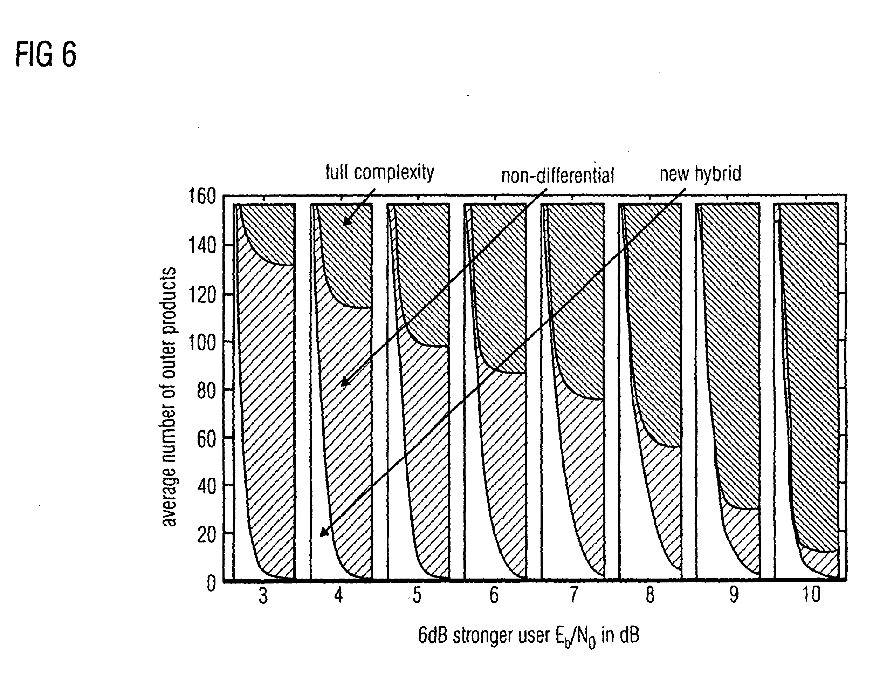

Since there was no performance difference between the non-differential and the new hybrid schemes, the performance curves in Fig. 5 are valid for both schemes. Fig. 6 compares the complexities in the same way as Fig. 4. In contrast to the equal power scenario, the advantage of the embodiment using the hybrid scheme against the non-differential one remains relatively high, even for high $E_b/N_0$ values. The following table shows the complexity reduction over 20 iterations per symbol by the embodiment using the hybrid scheme with respect to the non-differential scheme by D.N. Liu and M.P. Fitz in the above described different scenario.

| $E_b/N_0$ | 5 dB | 6 dB | 7 dB | 8 dB | 9 dB | 10 dB |
|---|---|---|---|---|---|---|
| Ratio | 66% | 58% | 48% | 35% | 23% | 14% |
| flops | 7.0E06 | 5.5E06 | 4.1E06 | 2.6E06 | 1.3E06 | 5.7E06 |

Embodiments may use the new differential recursive update algorithm for the iterative MMSE detection and decoding technique. The high complexity due to the computation of matrix inversions is reduced over iterations significantly with embodiments of the present invention. The differential algorithm may be seen as an extension of the non-differential algorithm by D.N. Liu and M.P. Fitz.

Embodiments may furthermore use the hybrid algorithm which switches between the conventional non-differential scheme and the new differential one by comparing the required complexities. Embodiments using the hybrid scheme can drastically reduce the complexity that helps achieving higher throughput and/or support higher number of users. Embodiments may also increase system capacities. Embodiments using the differential approach may require additional memory, the higher the number of symbols the differential scheme can be applied to, the higher the complexity reduction can be, the higher the memory requirement may be. Thus, embodiments using the new differential scheme may be flexibly applied to the proper number of symbols according to available memory of the system. Another advantage of embodiments using the hybrid approach in a real system is that the complexity, therefore the processing delay, is rather constant over different SNR values. That results in the SNR-independent predictable throughput performance.

In embodiments the controller 130 may be adapted for a received signal y being an IDMA (Interleaved Division Multiple Acces) or a CDMA (Code Division Multiple Access) signal. In one embodiment a base station transceiver for operating in a mobile communication system may comprise the apparatus 100. In other embodiments a mobile station transceiver for operating in a mobile communication system may comprise the apparatus 100.

Depending on certain implementation requirements of the inventive methods, the inventive methods can be implemented in hardware or in software. The implementation can be performed using a digital storage medium, in particular, a flash memory, a disc, a CD or a DVD having an electronically readable control signal stored thereon, which cooperates with a programmable computer system, such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

List of Reference Signs

| 100 | Apparatus |
| 110 | Variable Filter |
| 112 | Subfilter |
| 114 | Subfilter |
| 116 | Subfilter |
| 118 | Sum |
| 119 | Sum |
| 119a | Optional Processor |
| 120 | Decoder |
| 130 | Controller |
| 140 | Error Measure Calculator |
| 150 | Error Measure Evaluator |
| 160 | Filter Calculator |
| | |
| 200 | Transmitter |
| 205 | Convolutional Encoder |
| 210 | Repetition Encoder |
| 215 | Interleaver |
| 220 | Symbol mapper |
| 250 | Receiver |
| | |
| 300 | CDMA transmitter |
| 301 | Encoder |
| 302 | Interleaver |
| 303 | Symbol Mapper |
| 304 | Spreader |
| 305 | IDMA transmitter |
| 310 | Receiver |
| 315 | Radio Channel |
| 320 | Detector |
| 322 | Soft-Interference Cancellation |
| 324 | Residual Interference Suppression |
| 326 | Extrinsic LLR computation |
| 328 | Vanishing Interference |

330  Time line
340  Beginning of Iterations
350  Progressed Iterations

360  Intuitive viewgraph
362  Full MMSE
364  Embodiment performance

370  Embodiment performance hybrid
372  Embodiment performance differential
374  Embodiment performance non-differential

**Claims**

1. An apparatus (100) for providing probability measures $L_k$ for an estimated user signal $\hat{\mathbf{x}}_k$ from a received signal $\mathbf{y}$, the received signal $\mathbf{y}$ comprising multiple user signals $\mathbf{x}_k, k = 1..K$, and a noise signal $\eta$, comprising

   a variable filter (110) for filtering the receive signal $\mathbf{y}$ as an input signal using a variable filter characteristic based on a coupling measure $\mathbf{C}$ of the multiple user signals $\mathbf{x}_k$ to obtain a filtered received signal comprising probability measures $L_k^m$ on the estimated user signal $\hat{\mathbf{x}}_k$;

   a decoder (120) for decoding the filtered received signal on the basis of a decoding rule to obtain a processed received signal comprising processed probability measures $L_k^d$ of the estimated user signal $\hat{\mathbf{x}}_k$;

   a controller (130) for controlling the variable filter (110) and the decoder (120) in an iterative manner such that the processed received signal is provided to the variable filter (110) as the input signal;

   an error measure calculator (140) for calculating an error measure $v_i^{(q)}$ on the estimated user signal $\hat{\mathbf{x}}_k$ based on the processed received signal in an iteration $q$;

   an error measure evaluator (150) for determining an update situation of the variable filter (110) based on a change $\delta$ of the error measures $v_i^{(q)}$ and $v_i^{(q-1)}$ of subsequent iterations; and

   a filter calculator (160) for calculating an updated filter characteristic when the error measure evaluator has determined an update situation;

   wherein the controller (130) is further adapted for providing the probability measure $L_k$ for the estimated user signal $\hat{\mathbf{x}}_k$.

2. Apparatus (100) of claim 1, further comprising a first interleaver (210) for interleaving the filtered received signal comprising the probability measures $L_k^m$ according to a first interleaving rule.

3. Apparatus (100) of claim 2, further comprising a second interleaver (220) for interleaving the processed received signal before it is provided to the variable filter (110) as the input signal according to a second interleaving rule.

4. Apparatus (100) of claim 3, wherein the first and second interleaving rules are inverse to each other.

5. Apparatus (100) of one of the preceding claims, wherein the probability measures comprise log-likelihood-ratios for the estimated user signals $\hat{\mathbf{x}}_k$.

6. Apparatus (100) of one of the preceding claims, wherein the decoder (120) is adapted for using a decoding rule according to a convolutional or Low-Density-Parity-Check-code.

7. Apparatus (100) of one of the preceding claims being adapted for providing the probability measures $L_k$ from the received signal $\mathbf{y}$ comprised of received signal symbols $\mathbf{y}_n$, wherein the controller (130) is adapted for modelling a radio channel as an order $L$ finite length impulse response filter $\sum_{\ell=0}^{L} g_{\ell,k} \delta[n-\ell]$ which has the normalized

energy of $\sum_{\ell=0}^{L} \mathrm{E}\left\{\left|g_{\ell,k}\right|^2\right\}=1$, where E{·} denotes expectation and in which $g_{\ell,k}$ equals a channel coefficient of user $k$ and channel delay l,l = 0..$L$, and a received signal symbol is modeled as

$$y_n = \sum_{k=1}^{K} \sum_{\ell=0}^{L} g_{\ell,k} x_{n-\ell,k} + \eta_n \,, \qquad (1)$$

where $x_{n,k}$ denotes a transmit signal symbol $n$ of a user $k$ and $\eta_n$ is a zero-mean complex Gaussian noise with a variance of $N_0/2$ per real dimension, and wherein

$$\mathbf{y}_n = \mathbf{H}\mathbf{x}_n + \mathbf{\eta}_n \,, \qquad (2)$$

where $\mathbf{y}_n = [y_n,...,y_{n+L}]T$, $\eta_n = [\eta_n,...,\eta_{n+L}]^T$
and $\mathbf{x}_n = [x_{n-L,1},...x_{n-L,K},...,x_{n,1},...,x_{n,K},...,x_{n+L,1},...,x_{n+L,K}]^T$, $(\cdot)^T$ denotes the transposition and using $\mathbf{g}_\ell^T = [g_{\ell,1},...,g_{\ell,K}]$ the channel matrix $\mathbf{H}$ of dimension $(L+1)\times(2L+1)K$ is

$$\mathbf{H} = \begin{bmatrix} \mathbf{g}_L^T & \cdots & \mathbf{g}_0^T & & \\ & \ddots & \vdots & \ddots & \\ & & \mathbf{g}_L^T & \cdots & \mathbf{g}_0^T \end{bmatrix}, \qquad (3)$$

with

$$\mathbf{H} = \begin{bmatrix} \mathbf{H}_{n-L}...\mathbf{H}_n...\mathbf{H}_{n+L} \end{bmatrix}, \qquad (4)$$

where $\mathbf{H}_n$ has the dimension $(L+1)\times K$ and

$$\mathbf{H}_n = [\mathbf{h}_{n,1}...\mathbf{h}_{n,K}], \qquad (5)$$

and

$$\mathbf{y}_n = \sum_{\ell=-L}^{L} \sum_{k=1}^{K} \mathbf{h}_{n-\ell,k} \mathbf{x}_{n-\ell,k} + \mathbf{\eta}_n . \qquad (6)$$

8. Apparatus (100) of claim 7, wherein the variable filter (110) is adapted for obtaining the filtered received signal comprising probability measures as log-likelihood ratios according to

$$\begin{aligned} L^m\left(c_{m,n,k}\right) &= \log \frac{P\{c_{m,n,k}=+1|y_n\}}{P\{c_{m,n,k}=-1|y_n\}} \\ &= \log \frac{\sum_{x\in\Lambda_n^+} P(\mathbf{y}_n|x_{n,k}=x)P(x_{n,k}=x)}{\sum_{x\in\Lambda_n^-} P(\mathbf{y}_n|x_{n,k}=x)P(x_{n,k}=x)} \,, \end{aligned} \qquad (7)$$

where $c_{m,n,k}$ denotes an m-th bit of the n-th transmit symbol $x_{n,k}$, $P\{c_{m,n,k} = \pm 1|\mathbf{y}_n\}$ is the conditional probability that the code bit was transmitted given the received sequence $\mathbf{y}_n$, $A_m^+$ denotes the set of all constellation points where the m-th bit is +1 and $A_m^-$ the set of all constellation points where the m-th bits is -1, and

$$P\{x_{n,k} = x\} = \prod_{m=1}^{M} P\{c_{m,n,k} = d_m\}, \qquad (8)$$

where $d_m \in \{+1,-1\}$ and where $P\{c_{m,n,k} = d_m\}$ is computed from the L-value

$$P\{c_{m,n,k} = d_m\} = \frac{1}{2}(1 + d_m \tanh(L^m(c_{m,n,k})/2)), \qquad (9)$$

wherein $L^m(c_{m,n,k})$ is initialized to 0 for a first iteration.

9.  Apparatus (100) of claim 7 or 8, wherein the decoder (130) is adapted for obtaining the processed received signal comprising probability measures as log-likelihood ratios according to

$$\begin{aligned}
L^m(c_{m,n,k}) &= \log \frac{P\{c_{m,n,k} = +1|y_n\}}{P\{c_{m,n,k} = -1|y_n\}} \\
&= \log \frac{\sum_{x \in A_m^+} P(y_n|x_{n,k} = x) P(x_{n,k} = x)}{\sum_{x \in A_m^-} P(y_n|x_{n,k} = x) P(x_{n,k} = x)},
\end{aligned} \qquad (7)$$

where $c_{m,n,k}$ denotes an m-th bit of the n-th transmit symbol $x_{n,k}$, $P\{c_{m,n,k} = \pm 1|\mathbf{y}_n\}$ is the conditional probability that the code bit was transmitted given the received sequence $\mathbf{y}_n$, $A_m^+$ denotes the set of all constellation points where the m-th bit is +1 and $A_m^-$ the set of all constellation points where the m-th bits is -1, and

$$P\{x_{n,k} = x\} = \prod_{m=1}^{M} P\{c_{m,n,k} = d_m\}, \qquad (8)$$

where $d_m \in \{+1,-1\}$ and where $P\{c_{m,n,k} = d_m\}$ is computed from the L-value

$$P\{c_{m,n,k} = d_m\} = \frac{1}{2}(1 + d_m \tanh(L^m(c_{m,n,k})/2)), \qquad (9)$$

wherein $L^m(C_{m,n,k})$ is initialized to 0 for a first iteration.

10. Apparatus (100) of claim 8 or 9, wherein the variable filter (110) is adapted for estimating the user signal $\hat{\mathbf{x}}_{n,k}^{(q)}$ in an iteration $q, q \in \{0,...,Q\}$ as

$$\hat{x}_{n,k}^{(q)} = \mathbf{w}_{n,k}^{(q)H} \tilde{\mathbf{y}}_{n,k}^{(q)}, \qquad (10)$$

where $\widetilde{\mathbf{y}}_{n,k}^{(q)}$ results from a soft interference cancellation, according to

$$\widetilde{\mathbf{y}}_{n,k}^{(q)} = \mathbf{y}_n - \sum_{\ell \neq 0 \wedge k' \neq k} \mathbf{h}_{n-\ell,k'} \cdot \overline{x}_{n-\ell,k'}^{(q)} \ , \tag{11}$$

and

$$\overline{x}_{n,k}^{(q)} = \mathrm{E}\{x_{n,k}\} = \sum_{x \in A} x \, P\{x_{n,k} = x\} \tag{12}$$

is the symbol estimate at *q*-th iteration computed from an L-value sent from the decoder, $A = \{\alpha_1,...,\alpha_{2M}\}$ is an $2^M$-ary symbol alphabet, and the filter calculator (160) is adapted for determining

$$\mathbf{w}_{n,k}^{(q)} = \frac{1}{1 + \mathbf{h}_{n,k}^{H} \mathbf{C}_n^{(q)^{-1}} \mathbf{h}_{n,k}} \mathbf{C}_{n,k}^{(q)^{-1}} \mathbf{h}_{n,k} \ , \tag{13}$$

wherein $\mathbf{C}_n^{(q)^{-1}}$ and $\mathbf{C}_{n,k}^{(q)^{-1}}$ are coupling measures.

11. Apparatus (100) of claim 10, wherein the filter calculator (160) is adapted for determining the coupling measures according to

$$\begin{aligned} \mathbf{C}_n^{(q)} &= \mathrm{E}\left\{(\mathbf{y}_n - \mathrm{E}\{\mathbf{y}_n\})(\mathbf{y}_n - \mathrm{E}\{\mathbf{y}_n\})^H\right\} \\ &= \mathbf{H}\mathbf{V}_n^{(q)}\mathbf{H}^H + N_0\mathbf{I} \end{aligned} \tag{14}$$

$$\mathbf{C}_{n,k}^{(q)} = \mathbf{C}_n^{(q)} - \upsilon_{n,k}^{(q)}\mathbf{h}_{n,k}\mathbf{h}_{n,k}^H \ , \tag{15}$$

$$\begin{aligned} \mathbf{V}_n^{(q)} &= \mathrm{E}\left\{(\mathbf{x}_n - \overline{\mathbf{x}})(\mathbf{x}_n - \overline{\mathbf{x}})^H\right\} \\ &= \mathrm{diag}\left\{\upsilon_{n-L,1}^{(q)},...,\upsilon_{n-L,K}^{(q)},...,\upsilon_{n,1}^{(q)},...,\upsilon_{n,K}^{(q)},...,\upsilon_{n+L,1}^{(q)},...,\upsilon_{n+L,K}^{(q)}\right\}, \end{aligned} \tag{16}$$

$$\begin{aligned} \overline{\mathbf{x}}_n^{(q)} &= \mathrm{E}\{\mathbf{x}_n\} \\ &= \left[\overline{x}_{n-L,1}^{(q)},...,\overline{x}_{n-L,K}^{(q)},...,\overline{x}_{n,1}^{(q)},...,\overline{x}_{n,K}^{(q)},...,\overline{x}_{n+L,1}^{(q)},...,\overline{x}_{n+L,K}^{(q)}\right]^T \ , \end{aligned} \tag{17}$$

and

$$\upsilon_{n,k}^{(q)} = \sum_{x \in A} |x|^2 P\{x_{n,k} = x\} - |\overline{x}_n^{(q)}|^2 \ .$$

**12.** Apparatus (100) of claim 11, wherein the filter calculator (160) is adapted for considering a Gaussian distributed $P\{\hat{x}_{n,k}|x_{n,k}=x\}$ with mean value

$$\mu_{n,k}^{(q)} = \mathrm{E}\left\{\hat{x}_{n,k}^{(q)}\Big|x_{n,k}=x\right\} = \frac{\mathbf{h}_{n,k}^{H}\mathbf{C}_{n,k}^{(q)^{-1}}\mathbf{h}_{n,k}}{1+\mathbf{h}_{n,k}^{H}\mathbf{C}_{n,k}^{(q)^{-1}}\mathbf{h}_{n,k}}x \quad , \qquad (18)$$

and variance

$$\begin{aligned}v_{n,k}^{(q)} &= E\left\{\left|\hat{x}_{n,k}^{(q)}-\mu_{n,k}^{(q)}\right|^{2}\Big|x_{n,k}=x\right\}\\ &= \frac{\mathbf{h}_{n,k}^{H}{}_{n,k}^{(q)}\mathbf{C}_{n,k}^{(q)^{-1}}\mathbf{h}_{n,k}}{\left(1+\mathbf{h}_{n,k}^{H}\mathbf{C}_{n,k}^{(q)^{-1}}\mathbf{h}_{n,k}\right)^{2}} \quad , \end{aligned} \qquad (19)$$

and for approximating $P\{y_n|x_{n,k}=x\}$ by

$$P\left\{\hat{x}_{n,k}^{(q)}\Big|x_{n,k}=x\right\} = \frac{1}{\pi v_{n,k}^{(q)}}e^{\frac{\left|\mathbf{h}_{n,k}^{H}\mathbf{C}_{n,k}^{(q)^{-1}}\left(\hat{y}_{n,k}^{(q)}-\mathbf{h}_{n,k}x\right)\right|^{2}}{\mathbf{h}_{n,k}^{H}\mathbf{C}_{n,k}^{(q)^{-1}}\mathbf{h}_{n,k}}} . \qquad (20)$$

**13.** Apparatus (100) of one of the claims 11 or 12, wherein the filter calculator (160) is adapted for determining

$$\mathbf{C}_{n,k}^{(q)^{-1}} = \frac{1}{1-v_{n,k}^{(q)}\mathbf{h}_{n,k}^{H}\mathbf{C}_{n}^{(q)^{-1}}\mathbf{h}_{n,k}}\mathbf{C}_{n}^{(q)^{-1}} . \qquad (21)$$

**14.** Apparatus (100) of one of the claims 11 to 13, wherein the filter calculator (160) is adapted for determining $\mathbf{C}_{n}^{(q)}$ by

$$\mathbf{H} = [\mathbf{h}_{1},\mathbf{h}_{2},...,\mathbf{h}_{(2L+1)K}] , \qquad (23)$$

$$\mathbf{V}_{n}^{(q)} = \mathrm{diag}\left\{v_{1}^{(q)},v_{2}^{(q)},...,v_{(2L+1)K}^{(q)}\right\} , \quad \text{and} \qquad (24)$$

$$\mathbf{C}_{n}^{(q)} = \sum_{i=1}^{(2L+1)K}v_{i}^{(q)}\mathbf{h}_{i}\mathbf{h}_{i}^{H} + N_{0}\mathbf{I} . \qquad (25)$$

**15.** Apparatus (100) of claim 14, wherein the controller (130) is adapted for controlling the iteration q and the filter calculator (160) is adapted for determining $\mathbf{C}_{n}^{(q)}$ by

$$\mathbf{\Phi}_{i} = \mathbf{\Phi}_{i-1} - \frac{v_{i}^{(q)}/N_{0}}{1+v_{i}^{(q)}/N_{0}\mathbf{h}_{i}^{H}\mathbf{\Phi}_{i-1}\mathbf{h}_{i}}\left(\mathbf{\Phi}_{i-1}\mathbf{h}_{i}\right)\left(\mathbf{\Phi}_{i-1}\mathbf{h}_{i}\right)^{H} \qquad (26)$$

starting with $\Phi_0 = I$ and $\mathbf{C}_n^{(q)^{-1}} = \mathbf{\Phi}_{(2L+1)K} / N_0$, if $\upsilon_i^{(q)} / N_0 < \upsilon_{TH1}$ and $\Phi_i = \Phi_{i-1}$ otherwise, wherein $i = 1..(2L+1)$ $K$ and $\upsilon_{TH1}$ is a first threshold.

16. Apparatus (100) of one of the claims 14 to 15, wherein the controller (130) is adapted for controlling the iteration q and the filter calculator (160) is adapted for determining $\mathbf{C}_n^{(q)}$ by determining $\delta = \upsilon_i^{(q)} - \upsilon_i^{(q-1)}$, using

$$\mathbf{\Theta}_0 = \mathbf{I}, \mathbf{V}_n^{(-1)} = \mathbf{0} \text{ and } \mathbf{\Theta}_0 = \mathbf{C}_n^{(q-1)^{-1}} / N_0 \text{ for a first iteration } q=0, \text{ and setting } \otimes_i = \otimes_{i-1} \text{ if } |\delta|/N_0 < \upsilon_{TH2} \text{ and for}$$

setting $\mathbf{\Theta}_i = \mathbf{\Theta}_{i-1} - \frac{\delta/N_0}{1+\delta/N_0 \mathbf{h}_i^H \mathbf{\Theta}_{i-1}\mathbf{h}_i}(\mathbf{\Theta}_{i-1}\mathbf{h}_i)(\mathbf{\Theta}_{i-1}\mathbf{h}_i)^H$ otherwise, wherein $\mathbf{C}_n^{(q)^{-1}} = \mathbf{\Theta}_{(2L+1)K} / N_0$, $i = 1..$ $(2L + 1)K$ and $\upsilon_{TH2}$ is a second threshold.

17. Apparatus (100) of one of the preceding claims, wherein the controller (130) is adapted for stopping further iteration if a number of error measures $\upsilon_i^{(q)}$ or changes $\delta$ of error measures was below a threshold $n_{stop}$.

18. Apparatus (100) of one of the preceding claims, wherein the threshold $n_{stop}$ equals 1%, 5%, 10%, 20%, 40%, 50%, 75%, 90%, 95%, 98% or 99% of (2L+1)K.

19. Apparatus (100) of one of the claims 15 to 18, wherein the controller (130) is adapted for determining a first complexity measure for determining $\mathbf{C}_n^{(q)}$ by

$$\mathbf{\Phi}_i = \mathbf{\Phi}_{i-1} - \frac{\upsilon_i^{(q)}/N_0}{1+\upsilon_i^{(q)}/N_0 \mathbf{h}_i^H \mathbf{\Phi}_{i-1}\mathbf{h}_i}(\mathbf{\Phi}_{i-1}\mathbf{h}_i)(\mathbf{\Phi}_{i-1}\mathbf{h}_i)^H \qquad (26)$$

starting with $\Phi_0 = I$ and $\mathbf{C}_n^{(q)^{-1}} = \mathbf{\Phi}_{(2L+1)K} / N_0$, if $\upsilon_i^{(q)} / N_0 < \upsilon_{TH1}$ and $\Phi_i = \Phi_{i-1}$ otherwise, wherein $i=1..(2L+1)K$ and $\upsilon_{TH1}$ is a first threshold,

wherein the controller (130) is further adapted for determining a second complexity measure for determining $\mathbf{C}_n^{(q)}$ by determining $\delta = \upsilon_i^{(q)} - \upsilon_i^{(q-1)}$, using $\mathbf{\Theta}_0 = \mathbf{I}, \mathbf{V}_n^{(-1)} = \mathbf{0}$ and $\mathbf{\Theta}_0 = \mathbf{C}_n^{(q-1)^{-1}} / N_0$ for a first iteration $q=0$, and setting $\otimes_i = \otimes_{i-1}$ if $|\delta|/N_0 < \upsilon_{TH2}$ and for setting $\mathbf{\Theta}_i = \mathbf{\Theta}_{i-1} - \frac{\delta/N_0}{1+\delta/N_0 \mathbf{h}_i^H \mathbf{\Theta}_{i-1}\mathbf{h}_i}(\mathbf{\Theta}_{i-1}\mathbf{h}_i)(\mathbf{\Theta}_{i-1}\mathbf{h}_i)^H$ otherwise, wherein $\mathbf{C}_n^{(q)^{-1}} = \mathbf{\Theta}_{(2L+1)K} / N_0$, $i=1..(2L+1)K$ and $\upsilon_{TH2}$ is a threshold, and

wherein the controller (130) is further adapted for determining $\mathbf{C}_n^{(q)}$ based on the lower of the first and second complexity measure.

20. Apparatus (100) of claim 19, wherein the first complexity measure is determined by a number of $\upsilon_i^{(q-1)} / N_0 < \upsilon_{TH1}$ and wherein the second complexity measure is determined by a number of $\delta^{(q-1)} = \upsilon_i^{(q-1)} - \upsilon_i^{(q-2)}$ and $|\delta^{(q-1)}|/ N_0 < \upsilon_{TH2}$ during an iteration $q$.

21. Apparatus (100) of one of the preceding claims, wherein received signal **y** is an IDMA (Interleaved Division Multiple Access) or a CDMA (Code Division Multiple Access) signal.

22. Base station transceiver for operating in a mobile communication system comprising the apparatus (100) of one of the preceding claims.

**23.** Mobile station transceiver for operating in a mobile communication system comprising the apparatus (100) of one of the claims 1 to 22.

**24.** Method for providing probability measures $L_k$ for an estimated user signal $\hat{\mathbf{x}}_k$ from a received signal $\mathbf{y}$, the received signal $\mathbf{y}$ comprising multiple user signals $\mathbf{x}_k, k = 1..K,$ and a noise signal $\eta$, comprising the steps of

filtering the received signal $\mathbf{y}$ as an input signal using a variable filter characteristic based on a coupling measure $\mathbf{C}$ of the multiple user signals $\mathbf{x}_k$ to obtain a filtered received signal comprising probability measures $\boldsymbol{L_k^m}$ on the estimated user signal $\hat{\mathbf{x}}_k$ ;

decoding the filtered received signal on the basis of a decoding rule to obtain a processed received signal comprising processed probability measures $\boldsymbol{L_k^d}$ of the estimated user signal $\hat{\mathbf{x}}_k$;

controlling the filtering and the decoding in an iterative manner such that the processed received signal is provided to the filtering as the input signal;

calculating an error measure $\boldsymbol{\upsilon_i^{(q)}}$ on the estimated user signal $\hat{\mathbf{x}}_k$ based on the processed received signal in an iteration q ;

determining an update situation of the filtering based on a change $\delta$ of the error measures $\boldsymbol{\upsilon_i^{(q)}}$ and $\boldsymbol{\upsilon_i^{(q-1)}}$ of subsequent iterations;

calculating an updated filter characteristic when the update situation is determined; and

providing the probability measure $L_k$ for the estimated user signal $\hat{\mathbf{x}}_k$.

**25.** Computer program having a program code for performing the method of claim 24, when the computer program runs on a processor.

**Patentansprüche**

**1.** Eine Vorrichtung (100) zum Liefern von Wahrscheinlichkeitsmaßen $L_k$ für ein geschätztes Benutzersignal $\hat{\mathbf{x}}_k$ aus einem Empfangssignal $\mathbf{y}$, wobei das Empfangssignal $\mathbf{y}$ mehrere Benutzersignale $\mathbf{x}_k, k = 1..K$ und ein Rauschsignal $\eta$ aufweist, die folgende Merkmale aufweist:

ein variables Filter (110) zum Filtern des Empfangssignals $\mathbf{y}$ als ein Eingangssignal unter Verwendung einer variablen Filtercharakteristik basierend auf einem Kopplungsmaß $\mathbf{C}$ der mehreren Benutzersignale $\mathbf{x}_k$, um ein gefiltertes Empfangssignal zu erhalten, das Wahrscheinlichkeitsmaße $L_k^m$ betreffend das geschätzten Benutzersignal $\hat{\mathbf{x}}_k$ aufweist;

einen Decodierer (120) zum Decodieren des gefilterten Empfangssignals auf der Basis einer Decodierungsregel, um ein verarbeitetes Empfangssignal zu erhalten, das verarbeitete Wahrscheinlichkeitsmaße $L_k^d$ des geschätzten Benutzersignals $\hat{\mathbf{x}}_k$ aufweist;

eine Steuerung (130) zum Steuern des variablen Filters (110) und des Decodierers (120) auf iterative Weise, derart, dass das verarbeitete Empfangssignal zu dem variablen Filter (110) als das Eingangssignal geliefert wird;

einen Fehlermaßberechner (140) zum Berechnen eines Fehlermaßes $\upsilon_i^{(q)}$ betreffend das geschätzte Benutzersignal $\hat{\mathbf{x}}_k$ basierend auf dem verarbeiteten Empfangssignal in einer Iteration $q$ ;

einen Fehlermaßbewerter (150) zum Bestimmen einer Aktualisierungssituation des variablen Filters (110) basierend auf einer Änderung $\delta$ der Fehlermaße $\upsilon_i^{(q)}$ und $\upsilon_i^{(q-1)}$ von aufeinander folgenden Iterationen; und

einen Filterberechner (160) zum Berechnen einer aktualisierten Filtercharakteristik, wenn der Fehlermaßbewerter eine Aktualisierungssituation bestimmt hat;

wobei die Steuerung (130) ferner angepasst ist zum Liefern des Wahrscheinlichkeitsmaßes $L_k$ für das geschätzten Benutzersignal $\hat{\mathbf{x}}_k$.

**2.** Vorrichtung (100) gemäß Anspruch 1, die ferner eine erste Verschachtelungseinrichtung (210) zum Verschachteln des gefilterten Empfangssignals aufweist, das die Wahrscheinlichkeitsmaße $L_k^m$ aufweist, gemäß einer ersten Verschachtelungsregel.

3. Vorrichtung (100) gemäß Anspruch 2, die ferner eine zweite Verschachtelungseinrichtung (220) zum Verschachteln des verarbeiteten Empfangssignals aufweist, bevor es zu dem variablen Filter (110) als das Eingangssignal geliefert wird, gemäß einer zweiten Verschachtelungsregel.

4. Vorrichtung (100) gemäß Anspruch 3, bei der die erste und die zweite Verschachtelungsregel invers zueinander sind.

5. Vorrichtung (100) gemäß einem der vorangehenden Ansprüche, bei der die Wahrscheinlichkeitsmaße Logarithmus-Wahrscheinlichkeits-Verhältnisse für die geschätzten Benutzersignale $\hat{\mathbf{x}}_k$ aufweisen.

6. Vorrichtung (100) gemäß einem der vorangehenden Ansprüche, bei der der Decodierer (120) angepasst ist zur Verwendung einer Decodierungsregel gemäß einem Faltungs- oder Niedrig-Dichte-Paritäts-Prüfüngs-Codes.

7. Vorrichtung (100) gemäß einem der vorangehenden Ansprüche, die angepasst ist zum Liefern der Wahrscheinlichkeitsmaße $L_k$ von dem Empfangssignal $\mathbf{y}$, das aus Empfangssignalsymbolen $\mathbf{y}_n$ besteht, wobei die Steuerung (130) angepasst ist zum Modellieren eines Funkkanals als ein Finite-Länge-Impulsantwortfilter $\sum_{\ell=0}^{L} g_{\ell,k}\delta[n-\ell]$ der Ordnung $L$, das die normierte Energie von $\sum_{\ell=0}^{L} \mathrm{E}\left\{\left|g_{\ell,k}\right|^2\right\}=1$ aufweist, wobei $\mathrm{E}\{\cdot\}$ die Erwartung bezeichnet und wobei $g_{\ell,k}$ gleich einem Kanalkoeffizienten des Benutzers $k$ und der Kanalverzögerung l,l = 0..$L$ ist, und ein Empfangssignalsymbol modelliert ist als

$$y_n = \sum_{k=1}^{K}\sum_{\ell=0}^{L} g_{\ell,k}x_{n-\ell,k} + \eta_n, \qquad (1)$$

wobei $x_{n,k}$ ein Sendesignalsymbol $n$ eines Benutzers $k$ bezeichnet und $\eta_n$ ein komplexes Gaußsches Rauschen mit einem Mittelwert von Null mit einer Varianz von $N_0/2$ pro echte Dimension ist, und wobei

$$\mathbf{y}_n = \mathbf{H}\mathbf{x}_n + \boldsymbol{\eta}_n, \qquad (2)$$

wobei $\mathbf{y}_n = [y_n,...,y_{n+L}]^T$, $\eta_n =[\eta_n,...,\eta_{n+L}]^T$ und $\mathbf{x}_n [x_{n-L,1},,...x_{n-L,K},...,x_{n,1},...,x_{n,K},...,x_{n+L},1,...,x_{n+L,K}]^T$, $(\cdot)^T$ die Transposition bezeichnet und unter Verwendung von $\mathbf{g}_\ell^T =\left[g_{\ell,1},...,g_{\ell,K}\right]$ die Kanalmatrix H der Dimension $(L + 1)\times(2L +1)K$ wie folgt ist

$$\mathbf{H} = \begin{bmatrix} \mathbf{g}_L^T & \cdots & \mathbf{g}_0^T & & \\ & \ddots & \vdots & \ddots & \\ & & \mathbf{g}_L^T & \cdots & \mathbf{g}_0^T \end{bmatrix}, \qquad (3)$$

wobei

$$\mathbf{H} = \left[\mathbf{H}_{n-L}...\mathbf{H}_n...\mathbf{H}_{n+L}\right], \qquad (4)$$

wobei $\mathbf{H}_n$ die Dimension $(L + 1)\times K$ hat und

$$\mathbf{H}_n = [\mathbf{h}_{n,1}...\mathbf{h}_{n,K}],  \tag{5}$$

und

$$\mathbf{y}_n = \sum_{\ell=-L}^{L} \sum_{k=1}^{K} \mathbf{h}_{n-\ell,k} \mathbf{x}_{n-\ell,k} + \boldsymbol{\eta}_n .  \tag{6}$$

8. Vorrichtung (100) gemäß Anspruch 7, bei der das variable Filter (110) angepasst ist zum Erhalten des gefilterten Empfangssignals, das Wahrscheinlichkeitsmaße als Logarithmus-Wahrscheinlichkeits-Verhältnisse aufweist, gemäß

$$
\begin{aligned}
L^m\!\left(c_{m,n,k}\right) &= \log \frac{P\{c_{m,n,k}=+1|y_n\}}{P\{c_{m,n,k}=-1|y_n\}} \\
&= \log \frac{\sum_{x\in\Lambda_m^+} P(\mathbf{y}_n|x_{n,k}=x)P(x_{n,k}=x)}{\sum_{x\in\Lambda_m^-} P(\mathbf{y}_n|x_{n,k}=x)P(x_{n,k}=x)} ,
\end{aligned}  \tag{7}
$$

wobei $c_{m,n,k}$ ein $m$-tes Bit des n-ten Sendesymbols $x_{n,k}$ bezeichnet, $P\{c_{m,n,k}=\pm 1|\mathbf{y}_n\}$ die konditionale Wahrscheinlichkeit ist, dass das Codebit gesendet wurde bei der Empfangssequenz $\mathbf{y}_n$, $A_m^+$ den Satz aller Konstellationspunkte bezeichnet, wo das $m$-te Bit +1 ist und $A_m^-$ den Satz aller Konstellationspunkte bezeichnet, wo die m-ten Bits -1 sind, und

$$P\{x_{n,k}=x\} = \prod_{m=1}^{M} P\{c_{m,n,k}=d_m\},  \tag{8}$$

wobei $d_m \in \{+1,-1\}$ und wobei $P\{c_{m,n,k}=d_m\}$ berechnet wird aus dem L-Wert

$$P\{c_{m,n,k}=d_m\} = \frac{1}{2}(1+d_m \tanh(L^m(c_{m,n,k})/2)),  \tag{9}$$

wobei $L^m(c_{m,n,k})$ auf 0 initialisiert ist für eine erste Iteration.

9. Vorrichtung (100) gemäß Anspruch 7 oder 8, bei der der Decodierer (130) angepasst ist zum Erhalten des verarbeiteten Empfangssignals, das Wahrscheinlichkeitsmaße als Logarithmus-Wahrscheinlichkeits-Verhältnisse aufweist, gemäß

$$
\begin{aligned}
L^m\!\left(c_{m,n,k}\right) &= \log \frac{P\{c_{m,n,k}=+1|y_n\}}{P\{c_{m,n,k}=-1|y_n\}} \\
&= \log \frac{\sum_{x\in\Lambda_m^+} P(\mathbf{y}_n|x_{n,k}=x)P(x_{n,k}=x)}{\sum_{x\in\Lambda_m^-} P(\mathbf{y}_n|x_{n,k}=x)P(x_{n,k}=x)} ,
\end{aligned}  \tag{7}
$$

wobei $c_{m,n,k}$ ein $m$-tes Bit des $n$-ten Sendesymbols $x_{n,k}$ bezeichnet,
$P\{c_{m,n,k}=\pm 1|\mathbf{y}_n\}$ die konditionale Wahrscheinlichkeit ist, dass das Codebit gesendet wurde bei der Empfangssequenz $\mathbf{y}_n$, $A_m^+$ den Satz aller Konstellationspunkte bezeichnet, wo das $m$-te Bit +1 ist, und $A_m^-$ den Satz aller Konstellationspunkte bezeichnet, wo die $m$-ten Bits -1 sind, und

$$P\{x_{n,k} = x\} = \prod_{m=1}^{M} P\{c_{m,n,k} = d_m\}, \qquad (8)$$

wobei $d_m \in \{+1,-1\}$ und wobei $P\{c_{m,n,k} = d_m\}$ berechnet werden aus dem L-Wert

$$P\{c_{m,n,k} = d_m\} = \frac{1}{2}(1 + d_m \tanh(L^m(c_{m,n,k})/2)), \qquad (9)$$

wobei $L^m(c_{m,n,k})$ auf 0 initialisiert ist für eine erste Iteration.

10. Vorrichtung (100) gemäß Anspruch 8 oder 9, bei der das variable Filter (110) angepasst ist zum Schätzen des Benutzersignals $\hat{\mathbf{x}}_{n,k}^{(q)}$ bei einer Iteration $q, q \in \{0,...,Q\}$ als

$$\hat{x}_{n,k}^{(q)} = \mathbf{w}_{n,k}^{(q)H} \widetilde{\mathbf{y}}_{n,k}^{(q)}, \qquad (10)$$

wobei $\widetilde{\mathbf{y}}_{n,k}^{(q)}$ aus einer Soft-Interferenz-Beseitigung resultiert, gemäß

$$\widetilde{\mathbf{y}}_{n,k}^{(q)} = \mathbf{y}_n - \sum_{\ell \neq 0 \wedge k' \neq k} \mathbf{h}_{n-\ell,k'} \bar{x}_{n-\ell,k'}^{(q)}, \qquad (11)$$

und

$$\bar{x}_{n,k}^{(q)} = \mathrm{E}\{x_{n,k}\} = \sum_{x \in A} x\, P\{x_{n,k} = x\} \qquad (12)$$

der Symbolschätzwert bei der $q$-ten Iteration ist, berechnet aus einem $L$-Wert, gesendet von dem Decodierer, A = $\{\alpha_1,...,\alpha_2{}^M\}$ ein $2^M$-tes Symbolalphabet ist und der Filterberechner (160) angepasst ist zum Bestimmen von

$$\mathbf{w}_{n,k}^{(q)} = \frac{1}{1 + \mathbf{h}_{n,k}^H \mathbf{C}_n^{(q)^{-1}} \mathbf{h}_{n,k}} \mathbf{C}_{n,k}^{(q)^{-1}} \mathbf{h}_{n,k}, \qquad (13)$$

wobei $\mathbf{C}_n^{(q)^{-1}}$ and $\mathbf{C}_{n,k}^{(q)^{-1}}$ Kopplungsmaße sind.

11. Vorrichtung (100) gemäß Anspruch 10, bei der der Filterberechner (160) angepasst ist zum Bestimmen der Kopplungsmaße gemäß

$$\begin{aligned}\mathbf{C}_n^{(q)} &= \mathrm{E}\{(\mathbf{y}_n - \mathrm{E}\{\mathbf{y}_n\})(\mathbf{y}_n - \mathrm{E}\{\mathbf{y}_n\})^H\} \\ &= \mathbf{H}\mathbf{V}_n^{(q)}\mathbf{H}^H + N_0\mathbf{I}\end{aligned}, \qquad (14)$$

$$\mathbf{C}_{n,k}^{(q)} = \mathbf{C}_n^{(q)} - \upsilon_{n,k}^{(q)}\mathbf{h}_{n,k}\mathbf{h}_{n,k}^H \,, \qquad (15)$$

$$\begin{aligned}
\mathbf{V}_n^{(q)} &= \mathrm{E}\left\{(\mathbf{x}_n - \bar{\mathbf{x}})(\mathbf{x}_n - \bar{\mathbf{x}})^H\right\} \\
&= \mathrm{diag}\left\{\upsilon_{n-L,1}^{(q)},\ldots,\upsilon_{n-L,K}^{(q)},\ldots,\upsilon_{n,1}^{(q)},\ldots,\upsilon_{n,K}^{(q)},\ldots,\upsilon_{n+L,1}^{(q)},\ldots,\upsilon_{n+L,K}^{(q)}\right\},
\end{aligned} \qquad (16)$$

$$\begin{aligned}
\bar{\mathbf{x}}_n^{(q)} &= \mathrm{E}\{\mathbf{x}_n\} \\
&= \left[\bar{x}_{n-L,1}^{(q)},\ldots,\bar{x}_{n-L,K}^{(q)},\ldots,\bar{x}_{n,1}^{(q)},\ldots,\bar{x}_{n,K}^{(q)},\ldots,\bar{x}_{n+L,1}^{(q)},\ldots,\bar{x}_{n+L,K}^{(q)}\right]^T,
\end{aligned} \qquad (17)$$

und

$$\upsilon_{n,k}^{(q)} = \sum_{x\in A}|x|^2 P\{x_{n,k} = x\} - \left|\bar{x}_n^{(q)}\right|^2$$

12. Vorrichtung (100) gemäß Anspruch 11, bei der der Filterberechner (160) angepasst ist zum Berücksichtigen einer gaußsch verteilten $P\{\hat{x}_{n,k}|x_{n,k} = x\}$, mit einem Mittelwert

$$\mu_{n,k}^{(q)} = \mathrm{E}\left\{\hat{x}_{n,k}^{(q)}\Big|x_{n,k} = x\right\} = \frac{\mathbf{h}_{n,k}^H \mathbf{C}_{n,k}^{(q)^{-1}}\mathbf{h}_{n,k}}{1 + \mathbf{h}_{n,k}^H \mathbf{C}_{n,k}^{(q)^{-1}}\mathbf{h}_{n,k}} x \,, \qquad (18)$$

und einer Varianz

$$\begin{aligned}
v_{n,k}^{(q)} &= E\left\{\left|\hat{x}_{n,k}^{(q)} - \mu_{n,k}^{(q)}\right|^2\Big|x_{n,k} = x\right\} \\
&= \frac{\mathbf{h}_{n,k}^{H\ (q)}\mathbf{C}_{n,k}^{(q)^{-1}}\mathbf{h}_{n,k}}{\left(1 + \mathbf{h}_{n,k}^H \mathbf{C}_{n,k}^{(q)^{-1}}\mathbf{h}_{n,k}\right)^2},
\end{aligned} \qquad (19)$$

und zum Annähern von $P\{y_n|x_{n,k} = x\}$ durch

$$P\left\{\hat{x}_{n,k}^{(q)}\Big|x_{n,k} = x\right\} = \frac{1}{\pi v_{n,k}^{(q)}} e^{\frac{\left|\mathbf{h}_{n,k}^H \mathbf{C}_{n,k}^{(q)^{-1}}\left(\bar{y}_{n,k}^{(q)} - \mathbf{h}_{n,k}x\right)\right|^2}{\mathbf{h}_{n,k}^H \mathbf{C}_{n,k}^{(q)^{-1}}\mathbf{h}_{n,k}}} \,. \qquad (20)$$

13. Vorrichtung (100) gemäß einem der Ansprüche 11 oder 12, bei der der Filterberechner (160) angepasst ist zum Bestimmen von

$$\mathbf{C}_{n,k}^{(q)^{-1}} = \frac{1}{1 - \upsilon_{n,k}^{(q)}\mathbf{h}_{n,k}^H \mathbf{C}_n^{(q)^{-1}}\mathbf{h}_{n,k}}\mathbf{C}_n^{(q)^{-1}} \,. \qquad (21)$$

**14.** Vorrichtung (100) gemäß einem der Ansprüche 11 bis 13, bei der der Filterberechner (160) angepasst ist zum Bestimmen von $\mathbf{C}_n^{(q)}$ durch

$$\mathbf{H} = [\mathbf{h}_1, \mathbf{h}_2, ..., \mathbf{h}_{(2L+1)K}] , \qquad (23)$$

$$\mathbf{V}_n^{(q)} = \mathrm{diag}\left\{\upsilon_1^{(q)}, \upsilon_2^{(q)}, ..., \upsilon_{(2L+1)K}^{(q)}\right\} , \text{ and} \qquad (24)$$

$$\mathbf{C}_n^{(q)} = \sum_{i=1}^{(2L+1)K} \upsilon_i^{(q)} \mathbf{h}_i \mathbf{h}_i^H + N_0 \mathbf{I} . \qquad (25)$$

**15.** Vorrichtung (100) gemäß Anspruch 14, bei der die Steuerung (130) angepasst ist zum Steuern der Iteration q, und der Filterberechner (160) angepasst ist zum Bestimmen von $\mathbf{C}_n^{(q)}$ durch

$$\Phi_i = \Phi_{i-1} - \frac{\upsilon_i^{(q)}/N_0}{1+\upsilon_i^{(q)}/N_0 \mathbf{h}_i^H \Phi_{i-1}\mathbf{h}_i}\left(\Phi_{i-1}\mathbf{h}_i\right)\left(\Phi_{i-1}\mathbf{h}_i\right)^H \qquad (26)$$

beginnend mit $\Phi_0 = \mathbf{I}$ and $\mathbf{C}_n^{(q)^{-1}} = \Phi_{(2L+1)K} / N_0$ , wenn $\upsilon_i^{(q)}/N_0 < \upsilon_{TH1}$ und ansonsten $\Phi_i = \Phi_{i-1}$, wobei $i = 1..(2L+1)K$ and $\upsilon_{TH1}$ eine erste Schwelle ist.

**16.** Vorrichtung (100) gemäß einem der Ansprüche 14 oder 15, bei der die Steuerung (130) angepasst ist zum Steuern der Iteration q, und der Filterberechner (160) angepasst ist zum Bestimmen von $\mathbf{C}_n^{(q)}$ durch Bestimmen von $\delta = \upsilon_i^{(q)} - \upsilon_i^{(q-1)}$, unter Verwendung von $\Theta_0 = \mathbf{I}, \mathbf{V}_n^{(-1)} = \mathbf{0}$ und $\Theta_0 = \mathbf{C}_n^{(q-1)^{-1}}/N_0$ für eine erste Iteration q = 0 , und Setzen von $\Theta_i = \Theta_{i-1}$ wenn $|\delta|/N_0 < \upsilon_{TH2}$ und ansonsten zum Setzen von $\Theta_i = \Theta_{i-1} - \frac{\delta/N_0}{1+\delta/N_0\mathbf{h}_i^H\Theta_{i-1}\mathbf{h}_i}\left(\Theta_{i-1}\mathbf{h}_i\right)\left(\Theta_{i-1}\mathbf{h}_i\right)^H$ , wobei $\mathbf{C}_n^{(q)^{-1}} = \Theta_{(2L+1)K}/N_0$ , $i = 1..(2L+1)K$ und $\upsilon_{TH2}$ eine zweite Schwelle ist.

**17.** Vorrichtung (100) gemäß einem der vorangehenden Ansprüche, bei der die Steuerung (130) angepasst ist zum Stoppen einer weiteren Iteration, wenn eine Anzahl von Fehlermaßen $\upsilon_i^{(q)}$ oder Änderungen $\delta$ von Fehlermaßen unter einer Schwelle $n_{stop}$ war.

**18.** Vorrichtung (100) gemäß einem der vorangehenden Ansprüche, bei der die Schwelle $n_{stop}$ gleich 1%, 5%, 10%, 20%, 40%, 50%, 75%, 90%, 95%, 98% oder 99% von (2L+1)K ist.

**19.** Vorrichtung (100) gemäß einem der Ansprüche 15 bis 18, bei der die Steuerung (130) angepasst ist zum Bestimmen eines ersten Komplexitätsmaßes zum Bestimmen von $\mathbf{C}_n^{(q)}$ durch

$$\Phi_i = \Phi_{i-1} - \frac{\upsilon_i^{(q)}/N_0}{1+\upsilon_i^{(q)}/N_0\mathbf{h}_i^H\Phi_{i-1}\mathbf{h}_i}\left(\Phi_{i-1}\mathbf{h}_i\right)\left(\Phi_{i-1}\mathbf{h}_i\right)^H \qquad (26)$$

beginnend mit $\Phi_0 = I$ und $\mathbf{C}_n^{(q)^{-1}} = \mathbf{\Phi}_{(2L+1)K} / N_0$, wenn $\upsilon_i^{(q)} / N_0 < \upsilon_{TH1}$ und ansonsten $\Phi_i = \Phi_{i-1}$, wobei $i = 1..(2L + 1)K$ und $\upsilon_{TH1}$ eine erste Schwelle ist,

wobei die Steuerung (130) ferner angepasst ist zum Bestimmen eines zweiten Komplexitätsmaßes zum Bestimmen von $\mathbf{C}_n^{(q)}$ durch Bestimmen von $\delta = \upsilon_i^{(q)} - \upsilon_i^{(q-1)}$, unter Verwendung von $\mathbf{\Theta}_0 = \mathbf{I}, \mathbf{V}_n^{(-1)} = \mathbf{0}$ und

$\mathbf{\Theta}_0 = \mathbf{C}_n^{(q-1)^{-1}} / N_0$ für eine erste Iteration q = 0 , und Setzen von $\Theta_i = \Theta_{i-1}$ wenn $|\delta| / N_0 < \upsilon_{TH2}$ und anderweitig zum Setzen von $\mathbf{\Theta}_i = \mathbf{\Theta}_{i-1} - \frac{\delta / N_0}{1 + \delta / N_0 \mathbf{h}_i^H \mathbf{\Theta}_{i-1} \mathbf{h}_i} (\mathbf{\Theta}_{i-1} \mathbf{h}_i)(\mathbf{\Theta}_{i-1} \mathbf{h}_i)^H$, wobei $\mathbf{C}_n^{(q)^{-1}} = \mathbf{\Theta}_{(2L+1)K} / N_0$, $i = 1..(2L + 1)K$ und $\upsilon_{TH2}$ eine Schwelle ist, und

wobei die Steuerung (130) ferner angepasst ist zum Bestimmen von $\mathbf{C}_n^{(q)}$ basierend auf dem niedrigeren des ersten und zweiten Komplexitätsmaßes.

20. Vorrichtung (100) gemäß Anspruch 19, bei der das erste Komplexitätsmaß bestimmt ist durch eine Anzahl von $\upsilon_i^{(q-1)} / N_0 < \upsilon_{TH1}$, und bei der das zweite Komplexitätsmaß bestimmt ist durch eine Anzahl von $\delta^{(q-1)} = \upsilon_i^{(q-1)} - \upsilon_i^{(q-2)}$ und $|\delta^{(q-1)}|/N_0 < \upsilon_{TH2}$ während einer Iteration $q$.

21. Vorrichtung (100) gemäß einem der vorangehenden Ansprüche, bei der das Empfangssignal **y** ein IDMA- (Verschachtelungsteilungsmehrfachzugriff; Interleaved Division Multiple Access) oder ein CDMA- (Codeteilungsmehrfachzugriff; Code Division Multiple Access) Signal ist.

22. Basisstation-Sende-Empfangs-Gerät zum Betreiben in einem mobilen Kommunikationssystem, das die Vorrichtung (100) gemäß einem der vorangehenden Ansprüche aufweist.

23. Mobilstation-Sende-Empfangs-Gerät zum Betreiben in einem mobilen Kommunikationssystem, das die Vorrichtung (100) gemäß einem der Ansprüche 1 bis 22 aufweist.

24. Verfahren zum Liefern von Wahrscheinlichkeitsmaßen $L_k$ für ein geschätztes Benutzersignal $\hat{\mathbf{x}}_k$ aus einem Empfangssignal **y** , wobei das Empfangssignal y mehrere Benutzersignale $\mathbf{x}_k, k = 1..K$ aufweist, und ein Rauschsignal η, das folgende Schritte aufweist:

Filtern des Empfangssignals **y** als ein Eingangssignal unter Verwendung einer variablen Filtercharakteristik basierend auf einem Kopplungsmaß C der mehreren Benutzersignale $\mathbf{x}_k$, um ein gefiltertes Empfangssignal zu erhalten, das Wahrscheinlichkeitsmaße $L_k^m$ betreffend das geschätzte Benutzersignal $\hat{\mathbf{x}}_k$ aufweist;

Decodieren des gefilterten Empfangssignals auf der Basis einer Decodierungsregel, um ein verarbeitetes Empfangssignal zu erhalten, das verarbeitete Wahrscheinlichkeitsmaße $L_k^d$ des geschätztes Benutzersignals $\hat{\mathbf{x}}_k$ aufweist;

Steuern des Filterns und des Decodierens auf iterative Weise, derart, dass das verarbeitete Empfangssignal zu dem Filtern als das Eingangssignal geliefert wird;

Berechnen eines Fehlermaßes $\upsilon_i^{(q)}$ betreffend das geschätzte Benutzersignal $\hat{\mathbf{x}}_k$ basierend auf dem verarbeiteten Empfangssignal in einer Iteration $q$;

Bestimmen einer Aktualisierungssituation des Filterns basierend auf einer Änderung δ der Fehlermaße $\upsilon_i^{(q)}$ und $\upsilon_i^{(q-1)}$ von aufeinander folgenden Iterationen;

Berechnen einer aktualisierten Filtercharakteristik, wenn die Aktualisierungssituation bestimmt ist; und Liefern des Wahrscheinlichkeitsmaßes $L_k$ für das geschätzte Benutzersignal $\hat{\mathbf{x}}_k$.

25. Computerprogramm mit einem Programmcode zum Ausführen des Verfahrens gemäß Anspruch 24, wenn das Computerprogramm auf einem Prozessor läuft.

**Revendications**

1. Appareil (100) pour la fourniture de mesures de probabilité $L_k$ d'un signal d'utilisateur estimé $\hat{x}_k$ à partir d'un signal reçu $y$, le signal reçu comprenant de multiples signaux d'utilisateur $x_k$, $k$ = 1..K, et un signal de bruit $\eta$, comprenant un filtre variable (110) destiné à filtrer le signal reçu $y$ comme signal d'entrée à l'aide d'une caractéristique de filtre variable sur base d'une mesure de couplage $C$ des multiple signaux d'utilisateur $x_k$, pour obtenir un signal reçu filtré comprenant les mesures de probabilité $L_k^m$ sur le signal d'utilisateur estimé $\hat{x}_k$;

   un décodeur (120) destiné à décoder le signal reçu filtré sur base d'une règle de décodage, pour obtenir un signal reçu traité comprenant les mesures de probabilité traitées $L_k^d$ du signal d'utilisateur estimé $\hat{x}_k$;

   un dispositif de commande (130) destiné à commander le filtre variable (110) et le décodeur (120) de manière itérative de sorte que le signal reçu traité soit fourni au filtre variable (110) comme signal d'entrée;

   un calculateur de mesure d'erreur (140) destiné à calculer une mesure d'erreur $\upsilon_i^{(q)}$ sur le signal d'utilisateur estimé $\hat{x}_k$ sur base du signal reçu traité dans une itération q;

   un évaluateur de mesure d'erreur (150) destiné à déterminer une situation de mise à jour du filtre variable (110) sur base d'une variation $\delta$ des mesures d'erreur $\upsilon_i^{(q)}$ et $\upsilon_i^{(q-1)}$ d'itérations successives; et

   un calculateur de filtre (160) destiné à calculer une caractéristique de filtre mise à jour lorsque l'évaluateur de mesure d'erreur a déterminé une situation de mise à jour;

   dans lequel le dispositif de commande (130) est par ailleurs adapté pour fournir la mesure de probabilité $L_k$ pour le signal d'utilisateur estimé $\hat{x}_k$.

2. Appareil (100) selon la revendication 1, comprenant par ailleurs un premier entremêleur (210) destiné à entremêler le signal reçu filtré comprenant les mesures de probabilité $L_k^m$ selon une première règle d'entremêlement.

3. Appareil (100) selon la revendication 2, comprenant par ailleurs un deuxième entremêleur (220) destiné à entremêler le signal reçu filtré avant qu'il ne soit fourni au filtre variable (110) comme signal d'entrée selon une deuxième règle d'entremêlement.

4. Appareil (100) selon la revendication 3, dans lequel les première et deuxième règles d'entremêlement sont inverses l'une à l'autre.

5. Appareil (100) selon l'une des revendications précédentes, dans lequel les mesures de probabilité comprennent des ratios de probabilité logarithmiques pour les signaux d'utilisateur estimés $\hat{x}_k$.

6. Appareil (100) selon l'une des revendications précédentes, dans lequel le décodeur (120) est adapté pour utiliser une règle de décodage selon un code convolutionnel ou de contrôle de parité Faible Densité.

7. Appareil (100) selon l'une des revendications précédentes, adapté pour fournir les mesures de probabilité $L_k$ à partir du signal reçu $y$ composé de symboles de signal reçus $y_n$, dans lequel le dispositif de commande (130) est adapté pour modeler un canal de radiocommunication comme filtre à réponse impulsionnelle de longueur finie d'ordre $L$

   $\sum_{\ell=0}^{L} g_{l,k}\delta[n-\ell]$ qui a l'énergie normalisée $\sum_{\ell=0}^{L} E\{|g_{\ell,k}|^2\}=1$, où E{·} désigne l'attente et dans lequel $g_{t,k}$ est égal à un coefficient de canal de l'utilisateur $k$ et le retard de canal |,| =0..L, et un symbole de signal est modelé comme

$$y_n = \sum_{k=1}^{K}\sum_{\ell=0}^{L} g_{l,k}x_{n-l,k} + \eta_n \, , \qquad\qquad (1)$$

où $x_{n,k}$ désigne un symbole de signal d'émission $n$ d'un utilisateur $k$ et $\eta_n$ est un bruit gaussien complexe à moyenne zéro avec une variance de $N_0/2$ par dimension réelle, et où

$$y_n = Hx_n + \eta_n \qquad\qquad (2)$$

où

$$y_n = [y_n,...,y_{n+L}]^T, \qquad \eta_n = [\eta_n,...,\eta_{n+L}]^T$$

et $x_n = [x_{n-L,1},...x_{n-L,K},....,x_{n-1},....,x_{n+L,1},...,x_{n+L,K}]^T$, $(\cdot)^T$ désigne la transposition et, à l'aide de $g_\ell^T = [g_{\ell,1},...,g_{\ell,K}]$, la matrice de canal $H$ de la dimension $(L + 1)\times (2L + 1)K$ est

$$H = \begin{bmatrix} g_L^T & \cdots & g_0^T & & \\ & \ddots & \vdots & \ddots & \\ & & g_L^T & \cdots & g_0^T \end{bmatrix} \qquad\qquad (3)$$

avec

$$H = [H_{n-L}...H_n...H_{n+L}] \qquad\qquad (4)$$

où $H_n$ a la dimensión $(L+1)$xK et

$$H_n = [h_{n,1}...h_{n,K}] \qquad\qquad (5)$$

et

$$y_n = \sum_{\ell=-L}^{L}\sum_{k=1}^{K} h_{n-\ell,k} x_{n-\ell,k} + \eta_n \qquad\qquad (6)$$

8. Appareil (100) selon la revendication 7, dans lequel le filtre variable (110) est adapté pour obtenir le signal reçu filtré comprenant les mesures de probabilité comme ratios de probabilité logarithmiques selon

$$L^m(c_{m,n,k}) = \log \frac{P\{c_{m,n,k} = 1 + |y_n\}}{P\{c_{m,n,k} = 1 - |y_n\}}$$
$$= \log \frac{\sum_{reA_m^+} P(y_n|x_{n,k} = x)P(x_{n,k} = x)}{\sum_{reA_m^-} P(y_n|x_{n,k} = x)P(x_{n,k} = x)}, \qquad\qquad (7)$$

où $c_{m,n,k}$ désigne un $m$-ième bit du $n$-ième symbole de transmission $x_{n,k}$, $P\{c_{m,n,k} =1 \pm |y_n\}$, est la probabilité

conditionnelle que le bit de code avait été transmis vu la séquence reçue $y_n$, $A_m^+$ désigne l'ensemble de tous les points de constellation où le m-ième bit est +1 et $A_m^-$ est l'ensemble de tous les points de constellation où le $m$-ième bit est -1, et

$$P\{x_{n,k} = x\} = \prod_{m=1}^{M} P\{c_{m,n,k} = d_m\} \qquad (8)$$

où $d_m \in \{+1,-1\}$ et où $P\{c_{m,n,k} = d_m\}$ est calculé à partir de la valeur $L$

$$P\{c_{m,n,k} = d_m\} = \frac{1}{2}\left(1 + d_m \tanh\left(L^m\left(c_{m,n,k}\right)/2\right)\right) \qquad (9)$$

où $L^m(c_{m,n,k})$ est initialisé à 0 pour une première itération.

9. Appareil (100) selon la revendication 7 ou 8, dans lequel le décodeur (130) est adapté pour obtenir le signal reçu traité comprenant les mesures de probabilité comme ratios de probabilité logarithmiques selon

$$L^m\left(c_{m,n,k}\right) = \log\frac{P\{c_{m,n,k} = 1 + |y_n\}}{P\{c_{m,n,k} = 1 - |y_n\}}$$
$$= \log\frac{\sum_{reA_m^+} P\left(y_n|x_{n,k} = x\right)P\left(x_{n,k} = x\right)}{\sum_{reA_m^-} P\left(y_n|x_{n,k} = x\right)P\left(x_{n,k} = x\right)}, \qquad (7)$$

où $c_{m,n,k}$ désigne un $m$-ième bit du $n$-ième symbole de transmission $x_{n,k}$, $P\{c_{m,n,k} = 1 \pm |y_n\}$ est la probabilité conditionnelle que le bit de code avait été transmis vu la séquence reçue $y_n$, $A_m^+$ désigne l'ensemble de tous les points de constellation où le $m$-ième bit est +1 1 et $A_m^-$ est l'ensemble de tous les points de constellation où le $m$-ième bit est -1, et

$$P\{x_{n,k} = x\} = \prod_{m=1}^{M} P\{c_{m,n,k} = d_m\}, \qquad (8)$$

où $d_m \in \{+1,-1\}$ et où $P\{c_{m,n,k} = <d_m\}$ est calculé à partir de la valeur L

$$P\{c_{m,n,k} = d_m\} = \frac{1}{2}\left(1 + d_m \tanh\left(L^m\left(c_{m,n,k}\right)/2\right)\right), \qquad (9)$$

où $L^m(c_{m,n,k})$ est initialisé à 0 pour une première itération.

10. Appareil (100) selon la revendication 8 ou 9, dans lequel le filtre variable (110) est adapté pour estimer le signal d'utilisateur $\hat{x}_{n,k}^{(q)}$ dans une itération $q$, $q \in \{0,...,Q\}$ comme

$$\hat{x}_{n,k}^{(q)} = w_{n,k}^{(q)^N} \tilde{y}_{n,k}^{(q)}, \qquad (10)$$

où $\tilde{y}_{n,k}^{(q)}$ résulte d'une annulation d'interférence douce, selon

$$\tilde{y}_{n,k}^{(q)} = y_n - \sum_{\ell=0 \wedge k'=k} h_{n-\ell} \bar{x}_{n-\ell,k'}^{(q)}, \qquad (11)$$

et

$$\bar{x}_{n,k}^{(q)} = E\{x_{n,k}\} = \sum_{x \in A} x P\{x_{n,k} = x\} \qquad (12)$$

est l'estimation de symbole à la $q$-ième itération calculée à partir d'une valeur $L$ envoyée du décodeur, $A = \{a_1..., a_2{}^M\}$ est un alphabet de symboles $2^M$-aire, et le calculateur de filtre (160) est adapté pour déterminer

$$w_{n,k}^{(q)} = \frac{1}{1 + h_{n,k}^H C_n^{(q)^{-1}} h_{n,k}} C_{n,k}^{(q)^{-1}} h_{n,k}^H, \qquad (13)$$

où $C_n^{(q)^{-1}}$ et $C_{n,k}^{(q)^{-1}}$ sont des mesures de couplage.

**11.** Appareil (100) selon la revendication 10, dans lequel le calculateur de filtre (160) est adapté pour déterminer les mesures de couplage selon

$$\begin{aligned} C_n^{(q)} &= E\left\{ \left( y_n - E\{y_n\} \right) \left( y_n - E\{y_n\} \right)^H \right\} \\ &= H V_n^{(q)} H^H + N_0 I \end{aligned}, \qquad (14)$$

$$C_{n,k}^{(q)} = C_n^{(q)} - v_{n,k}^{(q)} h_{n,k} h_{n,k}^H, \qquad (15)$$

$$\begin{aligned} v_n^{(q)} &= E\left\{ \left( x_n - \bar{x} \right) \left( x_n - \bar{x} \right)^H \right\} \\ &= diag\left\{ v_{n-L,1}^{(q)},..., v_{n-L,K}^{(q)},..., v_{n,1}^{(q)},...v_{n,K}^{(q)},..., v_{n+L,1}^{(q)},..., v_{n+L,K}^{(q)} \right\} \end{aligned}, \qquad (16)$$

$$\begin{aligned} \bar{x}_n^{(q)} &= E\{x_n\} \\ &\left[ \bar{x}_{n-L,1}^{(q)},..., \bar{x}_{n-L,K}^{(q)},..., \bar{x}_{n,1}^{(q)},...\bar{x}_{n,K}^{(q)},..., \bar{x}_{n+L,1}^{(q)},..., \bar{x}_{n+L,K}^{(q)} \right]^T \end{aligned}, \qquad (17)$$

et

$$v_{n,k}^{(q)} = \sum_{x \in A} |x|^2 P\{x_{n,k} = x\} - |\bar{x}_n^{(q)}|^2 .$$

**12.** Appareil (100) selon la revendication 11, dans lequel le calculateur de filtre (160) est adapté pour tenir compte d'un $P\{\hat{x}_{n,k} | x_{n,k} = x\}$ distribué gaussien de valeur moyenne

$$\mu_{n,k}^{(q)} = E\{\hat{x}_{n,k}^{(q)} | x_{n,k} = x\} = \frac{h_{n,k}^H C_{n,k}^{(q)^{-1}} h_{n,k}}{1 + h_{n,k}^H C_{n,k}^{(q)^{-1}} h_{n,k}} , \qquad (18)$$

et variance

$$\begin{aligned} v_{n,k}^{(q)} &= E\left\{ |\hat{x}_{n,k}^{(q)} - \mu_{n,k}^{(q)}|^2 | x_{n,k} = x \right\} \\ &= \frac{h_{n,kn,k}^H C_{n,k}^{(q)^{-1}} h_{n,k}}{\left(1 + h_{n,k}^H C_{n,k}^{(q)^{-1}} h_{n,k}\right)^2} , \end{aligned} \qquad (19)$$

et pour approximer $P\{y_n | x_{n,k} = x\}$ par

$$P\{\hat{x}_{n,k}^{(q)} | x_{n,k} = x\} = \frac{1}{\pi v_{n,k}^{(q)}} e^{\frac{\left| h_{n,k}^H C_{n,k}^{(q)^{-1}} \left( \tilde{y}_{n,k}^{(q)} - h_{n,k2} \right) \right|^2}{h_{n,k}^H C_{n,k}^{(q)^{-1}} h_{n,k}}} . \qquad (20)$$

**13.** Appareil (100) selon les revendications 11 ou 12, dans lequel le calculateur de filtre (160) est adapté pour déterminer

$$C_{n,k}^{(q)^{-1}} = \frac{1}{1 - v_{n,k}^{(q)} h_{n,k}^H C_n^{(q)^{-1}} h_{n,k}} C_n^{(q)^{-1}} . \qquad (21)$$

**14.** Appareil (100) selon l'une des revendications 11 à 13, dans lequel le calculateur de filtre (160) est adapté pour déterminer $C_n^{(q)}$ par

$$H = \left[h_1, h_2, ..., h_{(2L+1)K}\right] , \qquad (23)$$

$$V_n^{(q)} = diag\left\{v_1^{(q)}, v_2^{(q)}, ..., v_{(2L+1)K}^{(q)}\right\}, \ et \qquad (24)$$

$$C_n^{(q)} = \sum_{i=1}^{(2L+1)K} v_i^{(q)} h_i h_i^H + N_0 I . \qquad (25)$$

**15.** Appareil (100) selon la revendication 14, dans lequel le dispositif de commande (130) est adapté pour commander l'itération q et le calculateur de filtre (160) est adapté pour déterminer $C_n^{(q)}$ par

$$\Phi_i = \Phi_{i-1} - \frac{v_i^{(q)}/N_0}{1 + v_i^{(q)}/N_0 h_i^H \Phi_{i-1} h_i}(\Phi_{i-1} h_i)(\Phi_{i-1} h_i)^H \qquad (26)$$

en commençant par $\Phi_0$=I et $C_n^{(q)-1} = \Phi_{(2L+1)K}/N_0$, si $v_i^{(q)}/N_0 < v_{TH1}$ et $\Phi_i = \Phi_{i-1}$, autrement, où $i = i = 1..(2L + 1)K$ et $v_{TH1}$ est un premier seuil.

**16.** Appareil (100) selon l'une des revendications 14 à 15, dans lequel le dispositif de commande (130) est adapté pour commander l'itération $q$ et le calculateur de filtre (160) est adapté pour déterminer $C_n^{(q)}$ en déterminant $\delta = v_i^{(q)} - v_i^{(q-1)}$, à l'aide de $\Theta_0 = I, V_n^{(-1)} = 0$ et de $\Theta_0 = C_n^{(q-1)-1}/N_0$ pour une première itération $q = 0$, et en réglant $\Theta_i = \Theta_{i-1}$ si $|\delta|/N_0 < v_{TH2}$ et pour régler

$$\Theta_i = \Theta_{i-1} - \frac{\delta/N_0}{1 + \delta/N_0 h_i^H \Theta_{i-1} h_i}(\Theta_{i-1} h_i)(\Theta_{i-1} h_i)^H$$ , autrement, où

$$C_n^{(q)-1} = \Theta_{(2L+1)K}/N_0, \quad i = 1...(2L+1)K$$ et $v_{TH2}$ est un deuxième seuil.

**17.** Appareil (100) selon l'une des revendications précédentes, dans lequel le dispositif de commande (130) est adapté pour arrêter une autre itération si un nombre de mesures d'erreur $\upsilon_i^{(q)}$ ou de variations $\delta$ de mesures d'erreur était inférieur à un seuil $n_{stop}$.

**18.** Appareil (100) selon l'une des revendications précédentes, dans lequel le seuil $n_{stop}$ est égal à 1%, 5%, 10%, 20%, 40%, 50%, 75%, 90%, 95%, 98% ou 99% de (2L+1)K.

**19.** Appareil (100) selon l'une des revendications 15 à 18, dans lequel le dispositif de commande (130) est adapté pour déterminer une première mesure de complexité pour déterminer $C_n^{(q)}$ par

$$\Phi_i = \Phi_{i-1} - \frac{v_i^{(q)}/N_0}{1 + v_i^{(q)}/N_0 h_i^H \Phi_{i-1} h_i}(\Phi_{i-1} h_i)(\Phi_{i-1} h_i)^H \qquad (26)$$

en commençant par $\Phi_0 = I$ et $C_n^{(q)-1} = \Phi_{(2L+1)K}/N_0$, si $v_i^{(q)}/N_0 < v_{TH1}$ et $\Phi_i = \Phi_{i-1}$, autrement, où $i = 1...(2L + 1)K$ et $v_{TH1}$, est un premier seuil,

dans lequel le dispositif de commande (130) est par ailleurs adapté pour déterminer une deuxième mesure de complexité pour déterminer $C_n^{(q)}$ en déterminant $\delta = v_i^{(q)} - v_i^{(q-1)}$, à l'aide de $\Theta_0 = I, V_n^{(-1)} = 0$ et de $\Theta_0 = C_n^{(q-1)-1}/N_0$ pour une première itération $q = 0$, et en réglant $\Theta_i = \Theta_{i-1}$ si $|\delta|/N_0 < v_{TH2}$, et pour régler

$$\Theta_i = \Theta_{i-1} - \frac{\delta/N_0}{1 + \delta/N_0 h_i^H \Theta_{i-1} h_i}(\Theta_{i-1} h_i)(\Theta_{i-1} h_i)^H$$ , autrement, où $C_n^{(q)-1} = \Theta_{(2L+1)K}/N_0$, $i$

= 1...(2*L* + *1*)*K* et $\nu_{TH2}$ est un seuil, et

dans lequel le dispositif de commande (130) est par ailleurs adapté pour déterminer $C_n^{(q)}$ sur base de la plus basse parmi la première et la deuxième mesure de complexité.

**20.** Appareil (100) selon la revendication 19, dans lequel la première mesure de complexité est déterminée par un nombre de $v_i^{(q-1)} / N_0 < v_{TH1}$, et dans lequel la deuxième mesure de complexité est déterminée par un nombre de $\delta^{(q-1)} = v_i^{(q-1)} - v_i^{(q-2)}$ et $|\delta^{(q-1)}|/N_0 < v_{TH2}$ pendant une itération *q*.

**21.** Appareil (100) selon l'une des revendications précédentes, dans lequel le signal reçu *y* est un signal IDMA (Interleaved Division Multiple Access) ou un signal CDMA (Code Division Multiple Access).

**22.** Emetteur-récepteur de station de base destiné à fonctionner dans un système de communication mobile comprenant l'appareil (100) selon l'une des revendications précédentes.

**23.** Emetteur-récepteur de station mobile destiné à fonctionner dans un système de communication mobile comprenant l'appareil (100) selon l'une des revendications 1 à 22.

**24.** Procédé pour la fourniture de mesures de probabilité $L_k$ d'un signal d'utilisateur estimé $\hat{x}_k$ à partir d'un signal reçu *y*, le signal reçu comprenant de multiples signaux d'utilisateur $x_k$, *k* = 1..*K*, et un signal de bruit η, comprenant les étapes consistant à

filtrer le signal reçu *y* comme signal d'entrée à l'aide d'une caractéristique de filtre variable sur base d'une mesure de couplage C des multiple signaux d'utilisateur $x_k$, pour obtenir un signal reçu filtré comprenant les mesures de probabilité $L_k^m$ sur le signal d'utilisateur estimé $\hat{x}_k$;

décoder le signal reçu filtré sur base d'une règle de décodage, pour obtenir un signal reçu traité comprenant les mesures de probabilité traitées $L_k^d$ du signal d'utilisateur estimé $\hat{x}_k$ ;

commander la filtration et le décodage de manière itérative de sorte que le signal reçu traité soit fourni à la filtration comme signal d'entrée;

calculer une mesure d'erreur $\upsilon_i^{(q)}$ sur le signal d'utilisateur estimé $\hat{x}_k$ sur base du signal reçu traité dans une itération *q*;

déterminer une situation de mise à jour de la filtration sur base d'une variation δ des mesures d'erreur $\upsilon_i^{(q)}$ et $\upsilon_i^{(q-1)}$ d'itérations successives; et

calculer une caractéristique de filtre mise à jour lorsque la situation de mise à jour est déterminée; et
fournir la mesure de probabilité $L_k$ pour le signal d'utilisateur estimé $\hat{x}_k$.

**25.** Programme d'ordinateur ayant un code de programme pour réaliser le procédé selon la revendication 24 lorsque le programme d'ordinateur est exécuté sur un processeur.

FIG 1A

Y

Controller

$L_K$

130

160

Filter
Calculator

update
Situation

Error
measure
Evaluator

$\upsilon_i^{(q)}$

Error
measure
Calculator

150

140

Filter
Characteristic

110

120

Variable
Filter

$L_k^m$

Decoder

$L_k^d$

100

EP 2 096 815 B1

# FIG 1B

EP 2 096 815 B1

# FIG 2A

$b_k$ → Convolutional encoder → Rep. → $c_{m,n,k}$ → $\Pi_k$ → Symbol mapper → $x_{n,k}$

200     205     210     215     220

# FIG 2B

110     210     120

$y_n$ → MUD → $L_e^m(c_{m,n,k})$ → $\Pi_k^{-1}$ → $L_a^d(c_{m,n,k})$ → APP decoder → $L(b_k)$

$L_a^m(c_{m,n,k})$ ← $\Pi_k$ ← $L_e^d(c_{m,n,k})$

for K users     220     130

250

# FIG 2C

EP 2 096 815 B1

FIG 2D

# FIG 2E

EP 2 096 815 B1

**Detector** (320)

from decoders (L)

Y → soft-interference cancellation (322) → residual interference suppression (324) → extrnsic LLR computation (326) → to decoders

(328)

interations (330)

noise → desired signal → (340) received sigal ← multiple access interferences

$$w_{n,k}^{(0)} = \beta_{n,k}^{(0)} \underbrace{(N_0 I + \sum_i h_i h_i^H)^{-1}}_{C_n^{(0)-1}} h_{n,k} \quad \text{full complexity MMSE}$$

· · ·

noise → desired signal → (350) received sigal ← no recidual interferences

$$w_{n,k}^{(q)} = \beta_{n,k}^{(q)} \underbrace{(N_0 I)^{-1}}_{C_n^{(q)-1}} h_{n,k} \quad \text{simple matched filter}$$

FIG 2F

full MMSE

iterations

MF

360

full MMSE

iterations

MF

362

full MMSE

iterations

MF

364

## FIG 2G

full MMSE

iterations

MF

FIG 2H

EP 2 096 815 B1

## FIG 2I

Hybrid Approach

switching to
less complex approach

Non-Differential Update

Differential Update

EP 2 096 815 B1

FIG 2J

FIG 3

FIG 4

# FIG 5

EP 2 096 815 B1

FIG 6

EP 2 096 815 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. Wang ; H. V. Poor.** Iterative (Turbo) soft interference cancellation and decoding for coded CDMA. *IEEE Transactions on Communications,* July 1999, vol. 47 (7), 1046-1061
- **M. Moher.** An iterative multiuser decoder for near-capacity communications. *IEEE Transactions on Communications,* July 1998, vol. 46 (7), 870-880
- **M. Tüchler ; A.C. Singer ; R. Koetter.** Minimum mean squared error equalization using a priori information. *IEEE Transactions on Signal Processing,* March 2002, vol. 50 (3), 673-683
- **Daniel N. Liu ; Michael P.** Low complexity linear MMSE detector with recursive update algorithm for iterative detection-decoding MIMO OFDM system. *Wireless Communications and Networking Conference,* 03 April 2006
- **M. Tüchler ; R. Koetter ; A.C. Singer.** Turbo equalization: Principles and new results. *IEEE Transactions on Communications,* May 2002, vol. 50 (5), 754-767

- **D.N. Liu ; M.P. Fitz.** Low complexity linear MMSE detector with recursive update algorithm for iterative detection-decoding MIMO OFDM System. *Proc. IEEE Wireless Communications and Networking Conference (WCNC2006),* April 2006, vol. 2, 850-855
- **H. V. Poor ; K. Kusume ; G. Bauch.** CDMA and IDMA: Iterative multiuser detections for near-far asynchronous communications. *Proc. IEEE Int. Symposium on Personal, Indoor and Mobile Radio Communications (PIMRC 2005),* September 2005, vol. 1, 426-431
- **D. Divsalar ; F. Pollara.** Hybrid concatenated codes and iterative decoding. *California Institute of Technology,* 1997
- **L. R. Bahl ; J. Cocke ; F. Jelinek ; J. Raviv.** Optimal decoding of linear codes for minimizing symbol error rate. *IEEE Trans. on Info. Theory,* March 1974, vol. 20 (2), 284-287
- **M. Tüchler ; A.C. Singer ; R. Koetter.** Minimum mean squared error equalization using a priori information. *IEEE Transactions an Signal Processing,* March 2002, vol. 50 (3), 673-683